# EUROPÄISCHE PATENTSCHRIFT

(11) **EP 2 984 460 B1**
(45) Veröffentlichungstag und Bekanntmachung des Hinweises auf die Patenterteilung: **16.09.2020**
(21) Anmeldenummer: 14705132.0
(22) Anmeldetag: 17.02.2014
(51) Int. Cl.: G01F 23/284, G01F 23/296, G01F 25/00

(54) **VERFAHREN ZUR FÜLLSTANDSMESSUNG NACH DEM LAUFZEITPRINZIP**
TIME-DOMAIN REFLECTION TYPE METHOD FOR MEASURING A FILLING LEVEL
PRODÉDÉ DE DÉTERMINATION D'UN NIVEAU DE LIQUIDE BASÉ SUR UNE MESURE DU TEMPS DE TRANSIT

(30) Priorität: 09.04.2013 DE 102013103532
(43) Veröffentlichungstag der Anmeldung: 17.02.2016
(73) Patentinhaber: Endress+Hauser SE+Co. KG, 79689 Maulburg (DE)
(72) Erfinder: GORENFLO, Stefan, 79688 Hausen (DE); MALINOVSKIY, Alexey, 79689 Maulburg (DE)
(74) Vertreter: Andres, Angelika Maria
(86) Internationale Anmeldenummer: PCT/EP2014/052993
(87) Internationale Veröffentlichungsnummer: WO 2014/166657

(56) Entgegenhaltungen:
- EP-A1- 2 527 805
- WO-A1-2012/100814
- DE-A1- 10 260 962
- DE-A1-102004 052 110
- US-A1- 2006 137 446
- US-A1- 2008 154 522

## Beschreibung

Die Erfindung betrifft ein Verfahren zur Messung eines Füllstands eines Füllguts in einem Behälter mit einem nach dem Laufzeitprinzip arbeitenden Füllstandsmessgerät, das im Messbetrieb Sendesignale in Richtung des Füllguts in den Behälter sendet, und anhand deren im Behälter zurückreflektierten Signalanteilen Echofunktionen ableitet, die die Amplituden der Signalanteile als Funktion von deren Laufzeit wiedergeben, mit Hilfe einer Tabelle, deren Zeilen diskreten Füllständen und deren Spalten diskreten Laufzeiten entsprechen, in der aus in der Vergangenheit abgeleiteten Echofunktionen abgeleitete Informationen über Laufzeiten von auf Reflektionen an im Behälter befindlichen Reflektoren zurückzuführende Maxima derselben als historische Messpunkte jeweils in derjenigen Zeile abgelegt sind, deren Zeilenindex dem zugehörigen Füllstand entspricht.

Nach dem Laufzeitprinzip arbeitende Füllstandsmessgeräte werden in einer Vielzahl von Industriezweigen eingesetzt, z.B. in der verarbeitenden Industrie, in der Chemie oder in der Lebensmittelindustrie.

Bei der Füllstandsmessung werden periodisch kurze Sendesignale, z.B. Mikrowellen oder Ultraschallwellen, mittels einer Antenne zur Oberfläche eines Füllguts gesendet und deren an der Oberfläche reflektierte Signalanteile nach einer von der zurückgelegten Wegstrecke abhängigen Laufzeit wieder empfangen. Es wird eine die Echoamplituden als Funktion der Laufzeit darstellende Echofunktion gebildet. Jeder Wert dieser Echofunktion entspricht der Amplitude der in einem bestimmten Abstand von der Antenne reflektierten Signalanteile.

Es wird dasjenige Maximum der Echofunktion bestimmt, das wahrscheinlich auf eine Reflexion des Sendesignals an der Füllgutoberfläche zurückzuführen ist. Dabei wird in der Regel angenommen, dass dieses nachfolgend als Füllstandsecho bezeichnete Maximum, eine größere Amplitude aufweist, als die übrigen Maxima derselben Echofunktion. Aus der Laufzeit des Füllstandsechos ergibt sich bei einer festen Ausbreitungsgeschwindigkeit der Sendesignale unmittelbar der Abstand zwischen der Füllgutoberfläche und der Antenne.

Diese herkömmliche Vorgehensweise funktioniert in einer Vielzahl von Anwendungen einwandfrei. Probleme treten jedoch immer dann auf, wenn das Füllstandsecho nicht zweifelsfrei identifiziert werden kann. Dies kann beispielsweise der Fall sein, wenn im Behälter Störer, wie zum Beispiel Einbauten, vorhanden sind, die die Sendesignale besser Reflektieren, als die Füllgutoberfläche.

In solchen Fällen kann, z.B. bei der Inbetriebnahme, dem Füllstandsmessgerät einmal der aktuelle Füllstand vorgegeben werden. Das Füllstandsmessgerät kann anhand des vorgegebenen Füllstandes das hierauf zurückzuführende Maximum als Füllstandsecho identifizieren und z.B. durch einen geeigneten Algorithmus verfolgen. Dabei werden z.B. in jedem Messzyklus Maxima der Echofunktion bestimmt und aufgrund der Kenntnis des im vorangegangenen Messzyklus ermittelten Füllstandes und einer anwendungsspezifischen maximal zu erwartenden Änderungsgeschwindigkeit des Füllstandes ein Laufzeitbereich ermittelt, in dem das Füllstandsecho in der aktuellen Echofunktion zu erwarten ist. Anschließend wird anhand der Laufzeit des in diesem Laufzeitbereich in der aktuellen Echofunktion auftretenden Maximums der aktuelle Füllstand bestimmt.

Eine solche Echoverfolgung hat den Nachteil, dass das Füllstandsecho ohne Unterbrechung verfolgt werden muss. Wenn das Füllstandsmessgerät, z.B. zu Wartungszwecken, außer Betrieb genommen wird, kann das Füllstandecho nicht weiter verfolgt werden. Das Füllstandsmessgerät ist dann bei der Wiederinbetriebnahme unter Umständen nicht in der Lage das Füllstandsecho zuverlässig zu erkennen. Es muss erneut der aktuelle Füllstand vorgegeben werden. Dies kann jedoch unter Umständen einen erheblichen Aufwand bedeuten. Wenn z.B. keine alternativen Messmethoden zur Verfügung stehen, kann es erforderlich sein, den Behälter komplett zu entleeren oder vollständig oder bis zu einer Referenzmarke zu befüllen. Dies bedeutet in der Industrie häufig eine Unterbrechung eines Herstellprozesses und kann mit erheblichem Zeitaufwand und hohen Kosten verbunden sein.

Zur Überwindung diese Problems ist in der DE 102 60 962 A1 ein Verfahren zur Messung eines Füllstands eines Füllguts in einem Behälter mit einem nach dem Laufzeitprinzip arbeitenden Füllstandsmessgerät das im Messbetrieb Sendesignale in Richtung des Füllguts in den Behälter sendet und anhand deren im Behälter zurückreflektierten Signalanteilen Echofunktionen ableitet, die die Amplituden der Signalanteile als Funktion von deren Laufzeit wiedergeben, beschrieben, bei dem im Anschluss an eine erste Inbetriebnahme vom Füllstandsmessgerät eine Tabelle erstellt und nachfolgend zur Füllstandsmessung verwendet wird,
- deren Zeilen diskreten Füllständen und deren Spalten diskreten Laufzeiten entsprechen,
- in der aus im Anschluss an die Inbetriebnahme abgeleiteten Echofunktionen abgeleitete Informationen über Laufzeiten von auf Reflektionen an im Behälter befindlichen Reflektoren zurückzuführende Maxima derselben als Messpunkte jeweils in derjenigen Zeile abgelegt sind, deren Zeilenindex dem zugehörigen Füllstand entspricht.

Die Tabelle wird dort beispielsweise generiert, in dem zu Beginn einmal der aktuelle Füllstand vorgegeben wird, anhand dieses vorgegebenen bekannten Füllstandes das Füllstandsecho identifiziert wird, und dessen zeitliche Entwicklung anhand der nachfolgend aufgezeichneten Echofunktionen mittels eines Echoverfolgungsverfahrens über einen Zeitraum verfolgt wird, in dem der Füllstand den gesamten Füllstandsmessbereich durchläuft. Damit können die nachfolgend aufgezeichneten Echofunktionen anhand der Laufzeit des verfolgten darin enthaltenen Füllstandechos jeweils einem Füllstand zugeordnet werden und aus den jeweiligen Echofunktionen abgeleitete Informationen als Messpunkte in der Tabelle aufgezeichnet werden. Als abgeleitete Informationen können beispielsweise Messpunkte generiert werden, die die Amplitude und die Laufzeit oder auch nur die Laufzeit der Maxima der Echofunktionen in Verbindung mit dem jeweils zugehörigen Füllstand wiedergeben.

Alternativ kann die Tabelle auch ohne Vorgabe eines aktuellen Füllstands generiert werden, indem das Füllstandsmessgerät den Füllstand auf herkömmliche Weise misst, der gemessene Füllstand als Ausgangspunkt für die oben genannte Echoverfolgung herangezogen wird, und die Tabelle entsprechend aufgezeichnet wird. In dem Fall wird nachfolgend anhand der Tabelle eine Plausibiltätskontrolle durchgeführt, um sicherzustellen, dass als Ausgangspunkt der Echoverfolgung tatsächlich ein Füllstandsecho und nicht beispielsweise aufgrund einer fehlerbehaften Füllstandsmessung ein auf einen anderen Reflektor zurückzuführendes Maximum der Echofunktion herangezogen wurde.

Hierzu werden anhand der in der Tabelle abgelegten Informationen Höhenlinien bestimmt, die jeweils die Laufzeiten von auf einen bestimmten Reflektor zurückzuführenden Maxima in Abhängigkeit vom Füllstand wiedergeben. Ergibt sich hieraus unterhalb der dem Füllstandsecho zugeordneten Höhenlinie ein Höhenlinienabschnitt, dessen Laufzeiten mit ansteigendem Füllstand ansteigen, so wird die Interpretation des als Ausgangspunkt für die Echoverfolgung verwendeten Maximums als Füllstandsecho widerlegt, die Tabelle verworfen, und eine neue Tabelle erstellt.

Ist die Tabelle einmal über den gesamten Füllstandmessbereich erstellt worden, steht sie für alle nachfolgenden Füllstandsmessungen zur Verfügung.
Dabei wird für die jeweils aktuell abgeleitete Echofunktion diejenige Tabellenzeile ermittelt, die die größte Übereinstimmung zu der aktuellen Echofunktion aufweist, und der aktuelle Füllstand anhand der Tabelle bestimmt oder auf andere Weise bestimmt und anhand der Tabelle überprüft. Dabei kann beispielsweise anhand des der Tabellenzeile entsprechenden Füllstands ein Laufzeitfenster für das Füllstandsecho bestimmt werden, und der genaue Füllstand dann anhand der Laufzeit des in diesem Laufzeitfenster befindlichen Maximums der aktuellen Echofunktion bestimmt werden. Alternativ oder zusätzlich können Echoverfolgungsverfahren eingesetzt werden, anhand derer ebenfalls ein Laufzeitfenster bestimmt wird, in dem das Füllstandsecho zu erwarten ist. In dem Fall kann die Tabelle dazu eingesetzt werden, die Identifizierung des verfolgten Echos als Füllstandsecho fortlaufend zu überprüfen.

Das Verfahren liefert somit auch unter schwierigen Messbedingungen zuverlässige Ergebnisse. Das gilt jedoch nur solange, wie die Messbedingungen am Einsatzort unverändert bleiben. Verändern sich die Messbedingungen am Einsatzort gibt die abgespeicherte Tabelle die Situation im Behälter nicht mehr richtig wieder. Das kann beispielsweise der Fall sein, wenn sich die Eigenschaften des im Behälter befindlichen Füllguts, insb. durch im Behälter ablaufende chemische Prozesse, einen Austausch des Füllguts oder durch Hinzufügung weiter Füllgutbestandteile verändern, oder Einbauten im Behälter entfernt, hinzugefügt oder in ihrer Position oder ihren Eigenschaften verändert werden.

Würde die Tabelle hier unverändert weiter verwendet werden, könnte das je nach Art der Veränderung der Messbedingungen unter Umständen zu erheblichen Messfehlern führen.

Auch in der Druckschrift US 2008/0154522 A1 wird ein Verfahren beschrieben, bei dem eine Echoverfolgung bzw. eine Aufzeichnung von Nutz- und Störechos in einer Tabelle erfolgt. Die Trennung von Stör- und Nutzechos erfolgt hierbei in erster Linie lediglich dadurch, ob sich die Amplitude oder Position des verfolgten Echos zeitlich ändert.

Ein darauf aufbauender Ansatz der Echoverfolgung wird in der internationalen Patentanmeldungsschrift WO20012/100814 A1 gezeigt. Hier werden zur Erkennung von Nutz- bzw. Störechos zusätzlich die Phase und die Polarität des jeweiligen Echosignals miteinbezogen.

Ein Verfahren zur Ermittlung einer Plausibilität, ob es sich bei dem empfangenen Echo um ein Nutz- oder Störechos handelt, wird in der Patentanmeldung DE 10 2004 052 110 A1 behandelt. Der Plausibilitätswert in Prozent wird hierbei durch eine logische Verknüpfung einer Vielzahl an Einflusskriterien ermittelt.

Die europäische Patentanmeldung EP 2 527 805 A1 thematisiert die Lokalisierung speziell von Mehrfach-Echos in einer Echokurve. Die erfolgt durch Miteinbezug der unterschiedlichen Signal-Ausbreitungsgeschwindigkeiten im Füllgut bzw. oberhalb des Füllgutes.

Ein weiteres Verfahren zur Erkennung von Nutz- und Störechos durch Auswertung von zeitlich nacheinander aufgezeichneten Echos ist in der Druckschrift US 2006/0137446 A1 offenbart. Charakteristisch bei dem dort gezeigten Verfahren ist die Erstellung mehrerer Ausgleichsgraden der Echo-Verläufe aus den verschiedenen nacheinander ermittelten Echo-Peaks sowie eine Ermittlung der Schnittpunkte der Ausgleichsgraden durch Interpolation. Hierbei können aus der Lage der Schnittpunkte Rückschlüsse darüber gezogen werden, welches der zugrundeliegenden Echos ein Nutz- bzw. Stör-Echo ist.

Es ist eine Aufgabe der Erfindung, ein Verfahren zur Füllstandsmessung nach dem Laufzeitprinzip unter Heranziehung einer Tabelle auszuführen, dass auch dann noch zuverlässige Messergebnisse liefert, wenn sich die Messbedingungen am Einsatzort des Füllstandsmessgeräts verändern können.

Zur Lösung dieser Aufgabe umfasst die Erfindung ein Verfahren zur Messung eines Füllstands eines Füllguts in einem Behälter mit einem nach dem Laufzeitprinzip arbeitenden Füllstandsmessgerät das im Messbetrieb Sendesignale in Richtung des Füllguts in den Behälter sendet und anhand deren im Behälter zurückreflektierten Signalanteilen Echofunktionen ableitet, die die Amplituden der Signalanteile als Funktion von deren Laufzeit wiedergeben, mit Hilfe einer Tabelle,
- deren Zeilen diskreten Füllständen und deren Spalten diskreten Laufzeiten entsprechen, und
- in der aus in der Vergangenheit abgeleiteten Echofunktionen abgeleitete Informationen über Laufzeiten von auf Reflektionen an im Behälter befindlichen Reflektoren zurückzuführende Maxima derselben als historische Messpunkte jeweils in derjenigen Zeile abgelegt sind, deren Zeilenindex dem zugehörigen Füllstand entspricht.
   Das Verfahren zeichnet sich dadurch aus, dass
- die Tabelle anhand von im laufenden Messbetrieb abgeleiteten aktuellen Echofunktionen fortlaufend aktualisiert wird, in dem
   -- aus aktuellen Echofunktionen abgeleitete Informationen über Laufzeiten von auf Reflektionen an im Behälter befindlichen Reflektoren zurückzuführende Maxima derselben als aktuelle Messpunkte jeweils in derjenigen Zeile abgelegt werden, deren Zeilenindex dem vom Füllstandsmessgerät ermittelten zugehörigen Füllstand entspricht,
   -- anhand der historischen und der aktuellen Messpunkte eine Plausibilitätskontrolle vorgenommen wird, indem anhand von entsprechend ausgewählten in der Tabelle abgelegten aktuellen und historischen Messpunkten zumindest ein Ausgleichsgradensegment, das die Abhängigkeit von jeweils ein und demselben von der Füllgutoberfläche verschiedenen Reflektor zuzuordnenden Laufzeiten t vom Füllstand L wiedergibt, bestimmt wird, wobei die Plausibilität anhand der Streuung σ der zur Bestimmung des zumindest einen Ausgleichsgradensegmentes herangezogenen aktuellen und historischen Messpunkte und/oder der Steigung des zumindest einen Ausgleichsgradensegmentes kontrolliert wird, und
   -- aufgrund der Plausibilitätskontrolle als unplausibel erkannte historische und aktuelle Messpunkte gelöscht und alle übrigen aktuellen Messpunkte als historische Messpunkte in die Tabelle übernommen werden.

Gemäß einer Ausgestaltung werden die aktuellen Messpunkte jeweils in der dem zugehörigen Füllstand entsprechenden Zeile in einem der zugehörigen Laufzeit entsprechenden Tabellenfeld eingetragen, wobei in den übrigen Tabellenfeldern der jeweiligen Zeile bereits eingetragene historische Messpunkte erhalten bleiben.

Eine Ausgestaltung der letztgenannten Ausgestaltung umfasst ein Verfahren, bei dem
- die Messpunkte neben der Laufzeit und dem zugehörigen Füllstand zusätzlich die Amplitude des zugehörigen Maximums der aktuellen Echofunktion wiedergeben, und
- die Amplitude des zugehörigen Maximums der aktuellen Echofunktion in dem zugehörigen Tabellenfeld unverändert abgespeichert wird, wenn das zugehörige Tabellenfeld vor der Eintragung des aktuellen Messpunkts frei war, und
- aus der Amplitude des historischen und der Amplitude des aktuellen Messpunkts mittels eines Filters ein Zwischenwert gebildet wird, der in dem Tabellenfeld als Amplitude abgelegt wird, wenn das zugehörige Tabellenfeld vor der Eintragung des aktuellen Messpunkts mit einem historischen Messpunkt belegt war.

Eine Weiterbildung der Erfindung umfasst ein Verfahren, bei dem
- anhand von entsprechend ausgewählten in der Tabelle abgelegten aktuellen und historischen Messpunkten mindestens ein Ausgleichsgradensegment bestimmt wird, das eine Abhängigkeit von Reflektionen an einem bestimmten vom Füllgut verschiedenen Reflektor im Behälter zugeordneten Laufzeiten vom Füllstand wiedergibt,
- die Plausibilitätskontrolle ein Verfahren umfasst, bei dem ein Maß für eine Streuung der zur Bestimmung des jeweiligen Ausgleichsgradensegments herangezogenen Messpunkte um das Ausgleichgradensegment bestimmt wird, und
- die zur Bestimmung des jeweiligen Ausgleichsgradensegments herangezogenen aktuellen und historischen Messpunkte gelöscht werden, wenn die Streuung einen vorgegebenen Schwellwert übersteigt.

Eine weitere Weiterbildung umfasst ein Verfahren, bei dem
- anhand von entsprechend ausgewählten in der Tabelle abgelegten aktuellen und historischen Messpunkten mindestens ein Ausgleichsgradensegment bestimmt wird, das eine Abhängigkeit von Reflektionen an einem bestimmten vom Füllgut verschiedenen Reflektor im Behälter zugeordneten Laufzeiten vom Füllstand in einem Füllstandsbereich wiedergibt, in dem dieser Reflektor vom Füllgut bedeckt ist,
- die Plausibilitätskontrolle ein Verfahren umfasst, bei dem eine der Ausbreitungsgeschwindigkeit der Signale im Füllgut entsprechende Steigung mindestens eines dieser Ausgleichsgradensegmente bestimmt wird,
- eine der Steigung entsprechende Ausbreitungsgeschwindigkeit mit einem Referenzwert oder einem Referenzwertbereich für die im Füllgut zu erwartende Ausbreitungsgeschwindigkeit verglichen wird, und
- die zur Bestimmung des jeweiligen Ausgleichsgradensegments herangezogenen aktuellen und historischen Messpunkte gelöscht werden, wenn die der ermittelten Steigung entsprechende Ausbreitungsgeschwindigkeit außerhalb eines anhand des Referenzwerts oder des Referenzwertebereichs vorgegebenen Ausbreitungsgeschwindigkeitsbereichs liegt.

Eine weitere Weiterbildung der Erfindung umfasst ein Verfahren, bei dem
- anhand von entsprechend ausgewählten in der Tabelle abgelegten aktuellen und historischen Messpunkten mindestens ein Ausgleichsgradensegment bestimmt wird, das eine Abhängigkeit von Reflektionen an einem bestimmten vom Füllgut verschiedenen Reflektor im Behälter zugeordneten Laufzeiten vom Füllstand in einem Füllstandsbereich wiedergibt, in dem dieser Reflektor vom Füllgut bedeckt ist, und
- die Plausibilitätskontrolle ein Verfahren umfasst, bei dem vermeintlich einer Reflektion an diesem Reflektor zuzuordnende aktuelle Messpunkte nur dann als historische Messpunkte übernommen werden, wenn sie innerhalb eines anhand eines Referenzwerts oder eines Referenzwertebereichs für die im Füllgut zu erwartende Ausbreitungsgeschwindigkeit oder anhand der Steigung des jeweiligen Ausgleichsgradensegments vorgegebenen Tabellenbereichs um dieses Ausgleichsgradensegments auftreten.

Eine weitere Weiterbildung der Erfindung umfasst ein Verfahren, bei dem
- für Maxima der Echofunktionen Echotypen vordefiniert sind,
- die einzelnen Echotypen jeweils diejenigen Maxima bezeichnen, die auf eine einfache Reflektion oder eine Mehrfachreflektionen an einem dem Echotyp zugeordneten bestimmten Reflektor zurückzuführen sind, wobei die Reflektoren mindestens die Füllgutoberfläche und den Behälterboden umfassen,
- die Laufzeiten der Maxima einer unmittelbar nach einer Wiederaufnahme des Messbetriebs abgeleiteten Echofunktion bestimmt werden,
- mindestens zwei dieser Maxima ausgewählt werden,
- eine der Anzahl der ausgewählten Maxima entsprechende Anzahl von Echotypen, von denen einer zwingend vom Typ eines auf eine Reflektion an der Füllgutoberfläche zurückzuführenden Füllstandsecho ist, ausgewählt werden,
- für alle möglichen Permutationen der Zuordnung der ausgewählten Maxima zu den ausgewählten Echotypen
   -- jeweils der sich aus dieser Zuordnung ergebende Füllstand bestimmt wird,
   --jeweils anhand dieses Füllstands vorläufige Messpunkte bestimmt werden,
   -- jeweils ein Grad der Übereinstimmung der vorläufige Messpunkte mit den in der zugehörigen Tabellenzeile abgelegten historischen Messpunkten bestimmt wird, und
- diejenigen vorläufigen Messpunkte als aktuelle Messpunkte in der Tabelle abgelegt werden, bei denen der höchste Grand an Übereinstimmung auftrat.

Weiter umfasst die Erfindung ein Verfahren gemäß der letztgenannten Weiterbildung, bei dem
- anhand der Zuordnung bei der der höchste Grad an Übereinstimmung auftrat ein Echoverfolgungsverfahren gestartet wird, anhand dessen zumindest die zeitliche Entwicklung des vermeintlichen Füllstandsechos verfolgt wird,
- die anhand dieser Zuordnung aus nachfolgenden Echofunktionen erhaltenen aktuellen Messpunkte in die Tabelle eingetragen werden,
- anhand der in der Tabelle abgelegten aktuellen und historischen Messpunkte Ausgleichsgradensegmente bestimmt werden, die jeweils eine Abhängigkeit von Reflektionen an einem bestimmten Reflektor zugeordneten Laufzeiten vom Füllstand wiedergeben, und
- die Zuordnung verworfen wird, wenn sich unterhalb des Reflektionen an der Füllgutoberfläche zugeordneten Ausgleichsgradensegments ein Ausgleichsgradensegment abzeichnet, dessen Laufzeiten mit steigendem Füllstand ansteigen.

Weiter umfasst die Erfindung eine Weiterbildung der vorgenannten Verfahren, bei dem
- anhand der in der Tabelle abgelegten Messpunkte Ausgleichsgradensegmente bestimmt werden, die jeweils eine Abhängigkeit von Reflektionen an einem bestimmten Reflektor zugeordneten Laufzeiten vom Füllstand wiedergeben, und
- vor jeder Unterbrechung des Messbetrieb Anfangs- und Endpunkte der einzelnen Ausgleichgradensegmente im Füllstandsmessgerät abgespeichert werden, und
- bei einer darauf folgenden Wiederaufnahme des Messbetriebs anhand der Anfangs- und Endpunkte der Ausgleichgradensegmente eine Tabelle generiert wird, die entlang der Ausgleichsgradensegmente verteilt angeordnete Eintragungen aufweist, und
- diese Tabelle als Starttabelle für den nachfolgenden Messbetrieb eingesetzt wird, wobei die Eintragungen als historische Messpunkte behandelt werden.

Gemäß einer Weiterbildung der letztgenannten Weiterbildung wird für jedes Ausgleichgradensegment ein Mass für eine Streuung der zur Bestimmung des jeweiligen Ausgleichsgradensegments herangezogenen Messpunkte um das jeweilige Ausgleichsgradensegment bestimmt und zusammen mit deren Anfangs- und Endpunkt abgespeichert.

Weiter umfasst die Erfindung eine Weiterbildung der Erfindung oder der erstgenannten Ausgestaltung, bei dem
- wird über einen Zeitraum, in dem der Füllstand einen Füllstandsmessbereich vorgegebener Mindestgröße überstreicht, überprüft, ob die während dieses Zeitraum abgeleiteten aktuellen Messpunkte Messpunkte umfassen, die einer Reflektion an einem in der Tabelle erfassten Störer zugeordnet werden können, und
- alle Reflektionen an diesem Störer zugeordneten historischen Messpunkte gelöscht werden, wenn innerhalb dieses Zeitraums kein aktueller Messpunkt abgeleitet wurde, der einer Reflektion an dem in der Tabelle erfassten Störer zugeordnet werden kann.

Die Erfindung und weitere Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.
- Fig. 1 zeigt:: eine Anordnung zur Füllstandsmessung mit einem nach dem Laufzeitprinzip arbeitenden Füllstandsmessgerät;
- Fig. 2 zeigt:: eine Echofunktion;
- Fig. 3 zeigt:: eine Abfolge von bei sinkendem Füllstand aufeinander folgend aufgezeichneten Echofunktionen;
- Fig. 4 zeigt:: eine anhand von aus den Echofunktionen von Fig. 3 abgeleiteten Messpunkten erstellte Tabelle;
- Fig. 5 zeigt:: eine Fortschreibung der Tabelle von Fig. 4 nach Ablauf einer chemischen Reaktion im Füllgut;
- Fig. 6 zeigt:: eine Abfolge von bei sinkendem Füllstand aufeinander folgend aufgezeichneten Echofunktionen in denen dem empfangenen Echosignal ein elektromagnetisches Störsignal überlagert ist;
- Fig. 7 zeigt:: eine Fortschreibung der Tabelle von Fig. 4 anhand von aus den Echofunktionen von Fig. 6 abgeleiteten Messpunkten;
- Fig. 8 zeigt:: eine Tabelle in der Messpunkte vorhanden sind, die auf eine zweimalige Reflektion an der Füllgutoberfläche zurückzuführen sind, und in der ein Tabellenbereich um ein Ausgleichsgradensegments durch Reflektionen am Behälterboden zugeordnete Messpunkte dargestellt ist, außerhalb dessen auf Reflektionen am Behälterboden zurückzuführende Messpunkte nicht auftreten können; und
- Fig. 9 zeigt:: eine Fortschreibung der Tabelle von Fig. 4, durch anhand einer fehlerhaften Echozuordung erhaltene Messpunkte.

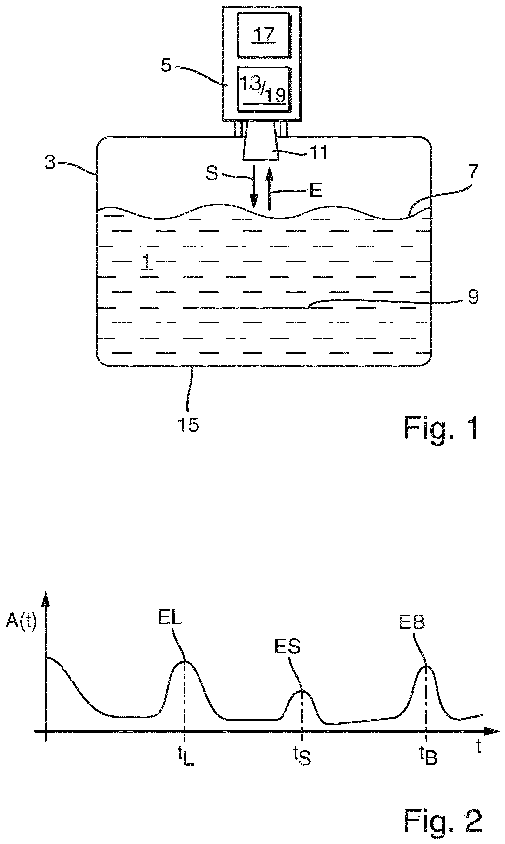

Fig. 1 zeigt ein Beispiel einer Anordnung zur Füllstandsmessung, in der das erfindungsgemäße Verfahren einsetzbar ist. Sie umfasst einen mit einem Füllgut 1 gefüllter Behälter 3, auf dem ein nach dem Laufzeitprinzip arbeitendes Füllstandsmessgerät 5 angeordnet ist. Als Füllstandsmessgerät 5 eignet sich z.B. ein mit Mikrowellen arbeitendes Füllstandsmessgerät oder ein mit Ultraschall arbeitendes Füllstandsmessgerät. Das Füllstandsmessgerät 5 dient dazu, einen Füllstand L des Füllguts 1 im Behälter zu messen. In dem Behälter 3 ist exemplarisch ein Störer 9 eingezeichnet. Störer 9 sind z.B. Einbauten im Behälter 3, Rührwerke und natürlich jede andere Struktur, an der Reflektionen auftreten können. Das hier nur ein einziger Störer 9 vorgesehen ist, dient dem leichteren Verständnis und der Übersichtlichkeit. Selbstverständlich können in realen Messsituationen sehr viel mehr Störer vorhanden sein.

Das Füllstandsmessgerät 5 weist beispielsweise eine Antenne 11 zum Senden von Sendesignalen S und zum Empfangen von deren im Behälter 3 zurück reflektierten Signalanteilen E auf. In dem dargestellten Ausführungsbeispiel ist eine einzige Antenne 11 vorgesehen, die sowohl sendet als auch empfängt. Alternativ können aber auch eine Antenne zum Senden und mindestens eine weitere Antenne zum Empfangen vorgesehen sein.

Die Sendesignale S werden in Richtung des Füllguts 1 gesendet und an einer Füllgutoberfläche 7, im Behälter 3 befindlichen Störern 9 und am Behälterboden 15 reflektiert. Die Überlagerung dieser Reflektionen bildet das Echosignal E.

Das erfindungsgemäße Verfahren ist jedoch nicht auf Füllstandsmessungen beschränkt, bei denen die Sendesignale S frei abgestrahlt werden. Es ist analog auch bei Füllstandsmessungen nach dem Laufzeitprinzip einsetzbar, bei denen elektromagnetische Signale entlang eines Wellenleiters in den Behälter sendet, und deren entlang des Wellenleiters zurückreflektierten Signalanteile nach einer von der zurückgelegten Wegstrecke abhängigen Laufzeit empfangen werden.

Bei der Füllstandsmessung nach dem Laufzeitprinzip werden periodisch Sendesignale S, z.B. kurze Mikrowellen- oder Ultraschallpulse, in Richtung eines Füllgutes 1 ausgesendet, deren an im Behälter 3 befindlichen Reflektoren zurückreflektierten Signalanteile E aufgenommen und einer Signalverarbeitung 13 zugeführt, die anhand der empfangenen Signalanteile E eine Echofunktion A(t) ableitet, die die Amplituden A der Signalanteile E in Abhängigkeit von deren für die im Behälter 3 zurückgelegte Entfernung benötigte Laufzeit t enthält.

In Fig. 2 ist ein Beispiel einer solchen Echofunktion A(t) für die Anordnung von Fig. 1 dargestellt. Die Echofunktion weist drei ausgeprägte Maxima auf. Das erste Maximum ist auf eine Reflektion an der Füllgutoberfläche zurückzuführendes Füllstandsecho EL, das zweite Maximum ein auf eine Reflektion an dem Störer 9 zurückzuführendes Störecho ES, und das dritte Maximum ist ein auf eine Reflektion am Behälterboden 15 des Behälters 3 zurückzuführendes Behälterbodenecho EB. Die drei Echos treten nach Laufzeiten t_{L}, t_{S}, t_{B} auf, die einer Entfernung zwischen der Antenne 11 und der Füllgutoberfläche, dem Störer 9, bzw. dem Boden 15 entsprechen.

Das Füllstandsmessgerät 5 weist einen Speicher 17 auf, in dem eine Tabelle abgespeichert ist, deren Zeilen diskreten - hier mit steigendem Zeilenindex [1, ..., n] ansteigenden - Füllständen L und deren Spalten diskreten - hier mit steigendem Spaltenindex [1, ..., m] zunehmenden - Lautzeiten t entsprechen. In der Tabelle sind aus in der Vergangenheit abgeleiteten Echofunktionen A(t) abgeleitete Informationen über Laufzeiten t von auf Reflektionen an im Behälter befindlichen Reflektoren zurückzuführende Maxima dieser Echofunktionen A(t) als historische Messpunkte jeweils in derjenigen Zeile abgelegt, deren Zeilenindex dem zugehörigen Füllstand L entspricht.

Äquivalent zu den zugehörigen Füllstanden L sind natürlich die zugehörigen Laufzeiten t_{L} der Füllstandsechos EL bzw. die zugehörigen Entfernungen zur Füllgutoberfläche 7. Diese Größen sind direkt proportional zueinander und können durch einfache Umrechnung mittels einer bekannten Signalausbreitungsgeschwindigkeit ineinander überführt werden.

Dabei brauchen in der Tabelle nicht sämtliche in den Echofunktionen A(t) enthaltenen Informationen im Detail wiedergespiegelt zu sein. Die in der Tabelle abgelegten Informationen können vielmehr stark vereinfachte daraus abgeleitete Informationen sein. Als abgeleitete Informationen können beispielsweise Messpunkte generiert werden, die die Amplitude A und die Laufzeit t oder auch nur die Laufzeit t der Maxima der Echofunktionen A(t) in Verbindung mit dem jeweils zugehörigen Füllstand L angeben. Zusätzlich können Schwellwerte für eine Mindestamplitude festgelegt werden, die ein Maximum mindestens aufweisen muss, um überhaupt Eingang in die Tabelle zu finden.

Diese Tabelle wird erstmalig im Anschluss an eine erste Inbetriebnahme des Messgeräts im laufenden Messbetrieb erstellt. Hierzu wird vorzugsweise das in der DE 102 60 962 A1 beschriebenen Verfahren eingesetzt.

Dabei werden über einen Zeitraum, indem der tatsächlich vorliegende Füllstand den Füllstandsmessbereich einmal überstreicht, Echofunktionen A(t) und zugehörige Füllstände L ermittelt, und aus den jeweiligen Echofunktionen A(t) abgeleitete Informationen als Messpunkte in der Tabelle abgelegt. Dabei gibt jeder Messpunkt zumindest die Laufzeit tᵢ eines Maximums einer der Echofunktionen A(t) und den zugehörigen Füllstand Lᵢ wieder.

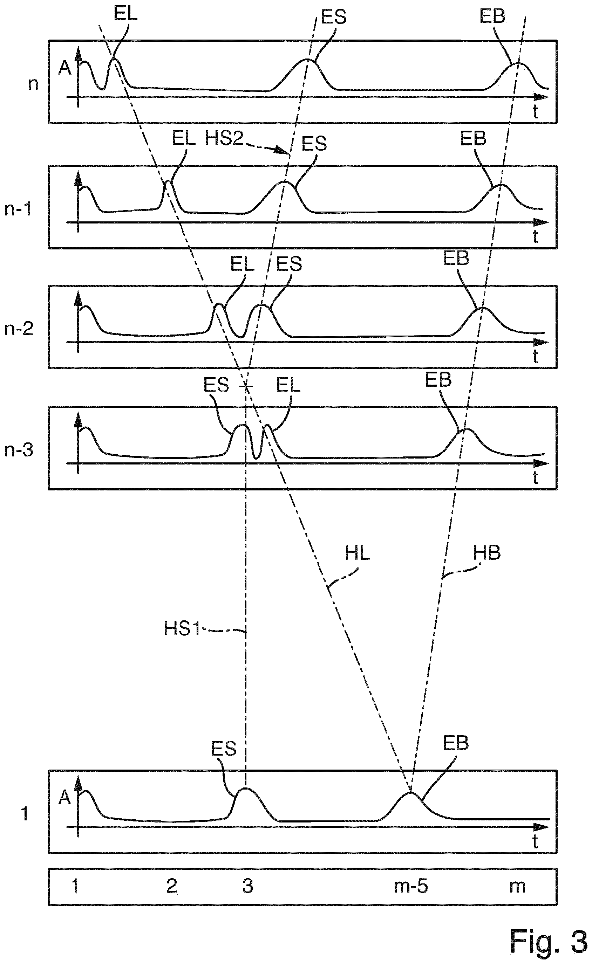

Fig. 3 zeigt hierzu eine Abfolge von nacheinander aufgezeichneten Echofunktionen A(t), wie sie sich ergibt, wenn der anfänglich volle Behälter 3 nach und nach vollständig entleert wird. Zur Veranschaulichung sind in Fig. 3 die Zeilenindices von 1 bis n und die Spaltenindices von 1 bis m dargestellt, unter denen die aus den jeweiligen Echofunktionen A(t) abgeleiteten Informationen als historische Messpunkte in der Tabelle einzutragen sind.

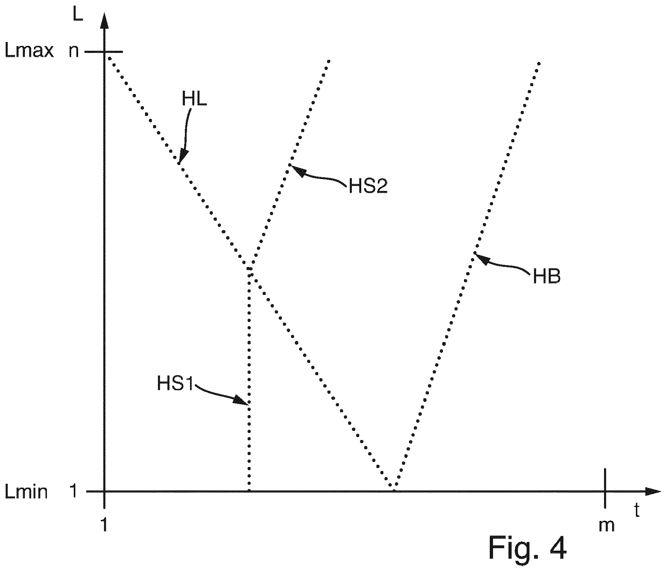

Fig. 4 zeigt eine grafische Darstellung der sich aus diesen Echofunktionen ergebenden Tabelle, in der die aus den in Fig. 3 dargestellten Echofunktionen A(t) abgeleiteten Messpunkte (Lᵢ, tᵢ) eingetragen sind.

In diesem zur Veranschaulichung des Prinzips idealisierten Beispiel verlaufen die auf die Reflektion an bestimmten Reflektoren, hier der Füllgutoberfläche 7 dem Behälterboden 15 und dem Störer 9, zurückzuführenden Messpunkte entlang deutlich erkennbarer Geradensegmente.

Dabei weist das auf Reflektionen an der Füllgutoberfläche zurückzuführende Füllstands-Geradensegment HL bei maximalem Füllstand Lₘₐₓ die kürzeste Laufzeit t auf, die dann mit sinkendem Füllstand L kontinuierlich ansteigt.

Umgekehrt weist das auf Reflektionen am Behälterboden 15 zurückzuführende Behälterboden-Geradensegment HB bei minimalem Füllstand Lₘᵢₙ die kürzeste Laufzeit t auf, die dann mit steigendem Füllstand L kontinuierlich ansteigt.

Demgegenüber bilden die auf Reflektionen am Störer 9 zurückzuführende Messpunkte zwei Geradensegmente HS1, HS2 aus, die sich auf dem Füllstands-Geradensegment HL treffen. Das unterhalb des Füllstands-Geradensegments HL verlaufende Störer-Gradensegment HS1 tritt bei einer konstanten Laufzeit t auf, während die Laufzeiten t des oberhalb des Füllstands-Geradensegments HL verlaufenden Störer-Geradensegments HS2 mit steigendem Füllstand L ansteigen.

Die Tabelle wird nachfolgend zur Füllstandsmessung herangezogen. Dies kann beispielsweise derart erfolgen, dass sie dazu verwendet wird, in im nachfolgenden laufenden Messbetrieb aufgezeichneten Echofunktionen A(t) das auf die Reflektion an der Füllgutoberfläche 7 zurückzuführende Füllstandsecho EL zu erkennen. Hierzu können aus der aktuellen Echofunktion A(t) abgeleiteten Informationen mit den in der Tabelle enthaltenen Informationen verglichen werden, und hierüber diejenige Tabellenzeile, und damit der zugehörige Füllstand L bestimmt werden, bei dem die größte Übereinstimmung zu den in der Tabelle abgelegten Informationen besteht.
Dieser kann unmittelbar als gemessener Füllstand ausgegeben werden. Vorzugsweise wird anhand der Tabellenzeile mit der größten Übereinstimmung ein Laufzeitfenster definiert, in dem das Füllstandsecho EL der aktuellen Echofunktion A(t) ermittelt wird. In dem Fall wird der der Laufzeit t_{L} des Füllstandsechos EL in der aktuellen Echofunktion A(t) entsprechende Füllstand L als Messergebnis ausgegeben. Alternativ oder zusätzlich kann die Tabelle zur Initialisierung und/oder Überwachung von Echoverfolgungsverfahren eingesetzt werden, mit deren Hilfe dann der Füllstand L bestimmt wird.

Dabei werden vorzugsweise für die Maxima der Echofunktionen Echotypen vordefiniert, von denen jeder Echotyp jeweils diejenigen Maxima bezeichnet, die auf eine einfache Reflektion oder eine Mehrfachreflektionen an einem bestimmten vorgegebenen Reflektor zurückzuführen sind. Der wichtigste hier als Füllstandsecho EL bezeichnete Echotyp umfasst die auf Reflektionen an der Füllgutoberfläche 7 zurückzuführenden Maxima. Weitere Echotypen sind die auf Reflektionen am Behälterboden 15 zurückzuführenden Behälterbodenechos EB, sowie auf Reflektionen an einem bestimmten Störer 9 zurückzuführenden Störechos ES. Darüber hinaus können auch ausgewählte Mehrfachechos, wie z.B. auf zweimalige Reflektion an der Füllgutoberfläche zurückzuführende Maxima vordefiniert werden.

Bei der Echoverfolgung werden Echos ausgewählter Echotypen, insb. das Füllstandsecho EL, in einer Echofunktion A(t) anhand der Tabelle oder auf andere Weise identifiziert und die zeitliche Entwicklung der zugehörigen Laufzeit t in den nachfolgend aufgezeichneten Echofunktionen A(t) verfolgt, und insb. zur Bestimmung der Laufzeit t_{L} des Füllstandsechos EL in der aktuellen Echofunktion A(t) herangezogen. Dabei wird die Zuordnung des verfolgten Echos zu dem jeweiligen Echotyp vorzugsweise fortlaufend anhand der Tabelle überprüft.

Erfindungsgemäß wird im Anschluss an die erste Inbetriebnahme des Füllstandsmessgeräts erstellte Tabelle anhand von im nachfolgenden laufenden Messbetrieb abgeleiteten aktuellen Echofunktionen A(t) fortlaufend aktualisiert.

Die Aktualisierung erfolgt, in dem aus aktuellen Echofunktionen A(t) abgeleitete Informationen über Laufzeiten t von auf Reflektionen an im Behälter 3 befindlichen Reflektoren zurückzuführende Maxima derselben als aktuelle Messpunkte jeweils in derjenigen Zeile abgelegt werden, deren Zeilenindex dem vom Füllstandsmessgerät 5 ermittelten zugehörigen Füllstand L entspricht.
Hierdurch wird erreicht, dass Veränderungen der Messbedingungen am Einsatzort, wie z.B. Veränderungen des Füllguts oder Veränderungen bzgl. im Behälter vorhandener Störer 9, Eingang in die Tabelle finden, und somit bei nachfolgenden Messungen mit berücksichtigt werden.

Dabei wird vorzugsweise derart Verfahren, dass die aktuellen Messpunkte jeweils in dem entsprechenden Tabellenfeld eingetragen werden, und in den übrigen Tabellenfeldern der jeweiligen Zeile bereits eingetragene historische Messpunkte erhalten bleiben. Enthalten die Messpunkte neben der Laufzeit t und dem zugehörigen Füllstand L zusätzlich die Amplitude des zugehörigen Maximums der aktuellen Echofunktion A(t) wird vorzugsweise überprüft, ob das zugehörige Tabellenfeld frei ist, oder ob dort bereits ein historischer Messpunkt eingetragen ist. Ist das Tabellenfeld frei, wird die Amplitude unverändert abgespeichert. Enthält das Tabellenfeld bereits einen historischen Messpunkt, wird vorzugsweise aus der Amplitude des historischen und der Amplitude des aktuellen Messpunkts mittels eines Filters ein Zwischenwert gebildet, der dann in dem zugehörigen Tabellenfeld als Amplitude abgelegt wird.

Eine Aktualisierung der Tabelle ist jedoch nur dann zielführend, wenn sich die Bedingungen tatsächlich verändert haben, und für die Aktualisierung nur solche Messpunkte verwendet werden, die Bedingungen am Einsatzort tatsächlich korrekt wiederspiegeln. Dabei tritt das Problem auf, dass nicht ohne weiteres erkennbar ist, ob Abweichungen der aktuellen Messpunkte von dem durch die historischen Messpunkte gegebenen Gesamtbild zufällig sind, auf Messfehlern beruhen, oder auf Veränderungen der Messbedingungen zurückzuführen sind.

Erfindungsgemäß wird zur Lösung dieses Problems anhand der historischen und der aktuellen Messpunkte eine Plausibilitätskontrolle vorgenommen, und es werden alle aufgrund der Plausibilitätskontrolle als unplausibel erkannten historischen und/oder aktuellen Messpunkte gelöscht und alle übrigen aktuellen Messpunkte als historische Messpunkte in die Tabelle übernommen.

Hierdurch wird zum einen erreicht, dass von vorneherein nicht vertrauenswürdige aktuelle Messpunkte gar nicht erst in die Tabelle eingehen. Zum anderen wird erreicht, dass zumindest anfänglich plausibel erscheinende aktuelle Messpunkte als historische Messpunkte in die Tabelle übernommen werden, dort aber nur solange verbleiben, bis sich ein erkennbarer Widerspruch ergibt. Damit ist sichergestellt, dass im normalen Betrieb ohne Veränderung der Messbedingungen am Einsatzort auftretende Schwankungen keine grundlegende Veränderung der Tabelle bewirken können, wohingegen relevante Veränderungen der Messbedingungen vergleichsweise zeitnah erfasst werden, und nicht nur die hiervon erfassten aktuellen, sondern auch die hiervon erfassten historischen Messpunkte gelöscht, und der entsprechende Tabelleninhalt unter den veränderten Messbedingungen neu erstellt werden kann.

Die Plausibilitätskontrolle erfolgt anhand von mindestens einem Überprüfungsverfahren, das anhand der aktuellen und der historischen Messpunkte durchgeführt wird. Vorzugsweise werden möglichst viele verschiedene Überprüfungsverfahren parallel zueinander angewendet.

Ein hierzu einsetzbares Überprüfungsverfahren besteht darin, anhand von entsprechend ausgewählten in der Tabelle abgelegten aktuellen und historischen Messpunkten Ausgleichsgradensegmente zu bestimmen, die die Abhängigkeiten von jeweils ein und demselben von der Füllgutoberfläche 7 verschiedenen Reflektor zuzuordnenden Reflektionen zugeordneten Laufzeiten t vom Füllstand L wiedergeben. Dabei werden für Reflektoren, die sich je nach Füllstand L ober- oder unterhalb der Füllgutoberfläche 7 befinden können zwei Ausgleichsgeradensegmente bestimmt, von denen eines oberhalb und eines unterhalb der den Füllstand L als Funktion der Laufzeit t wiedergebenden Gerade verläuft.

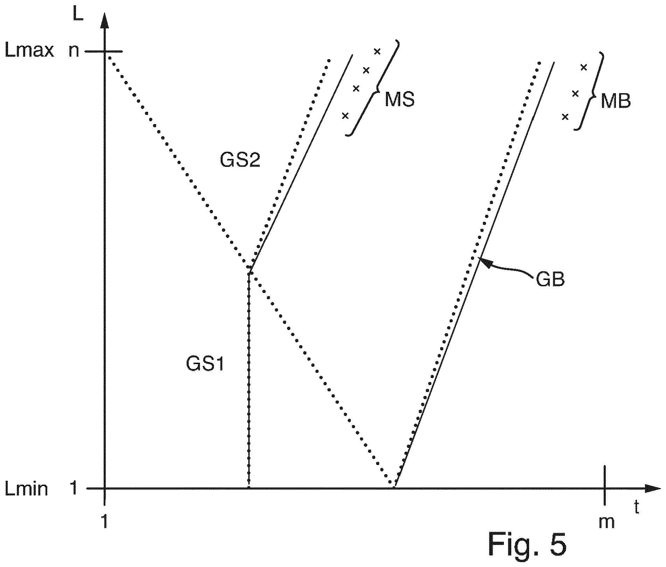

Fig. 5 zeigt als Beispiel hierfür eine Fortschreibung der Tabelle von Fig. 4, in der ein Ausgleichsgradensegment GB dargestellt ist, dass die Abhängigkeit von Reflektionen am Behälterboden 15 zugeordneten Laufzeiten t vom Füllstand L wiedergibt. Zusätzlich sind hier zwei auf Reflektionen am Störer 9 zurückzuführende Ausgleichsgradensegmente GS1 und GS2 dargestellt. Das Ausgleichsgradensegmente GS1 gibt die
Abhängigkeit von Reflektionen am Störer 9 zugeordneten Laufzeiten t vom Füllstand L für diejenigen Füllstände wieder, bei denen sich der Störer 9 oberhalb des Füllguts 1 befindet. Das Ausgleichsgradensegmente GS2 gibt die
Abhängigkeit von Reflektionen am Störer 9 zugeordneten Laufzeiten t vom Füllstand L für diejenigen Füllstände wieder, bei denen sich der Störer 9 unterhalb des Füllguts 1 befindet,

Anschließend wird ein Maß für eine Streuung σ der zur Bestimmung des jeweiligen Ausgleichsgradensegments GB, GS1 bzw. GS2 herangezogenen aktuellen und historischen Messpunkte um das jeweilige Ausgleichgradensegment GB, GS1, GS2 bestimmt.

Übersteigt die anhand der aktuellen und der historischen Messpunkte ermittelte Streuung σ dieser Messpunkte um das zugehörige Ausgleichsgeradensegment GB, GS1, GS2 einen vorgegebenen Schwellwert, so werden vorsorglich alle zur Bestimmung des betroffenen Ausgleichsgradensegments GB, GS1, GS2 herangezogenen Messpunkte gelöscht.

Liegen unveränderte Messbedingungen vor, treten nur geringe Streuungen σ der Messpunkte um das jeweilige Ausgleichsgradensegment GP, GS1, GS2 auf, die den jeweiligen Schwellwert nicht übersteigen. Solange das der Fall ist, gibt die Tabelle die Messbedingungen im Behälter 3 unverändert korrekt wieder.

Da die Tabelle auf die oben beschriebene Weise fortlaufend fortgeschrieben wird, passt sie sich kontinuierlich an veränderte Messbedingungen an.

Hat sich die Ausbreitungsgeschwindigkeit der Signale im Füllgut 1 aufgrund einer Füllgutveränderung geändert, so führt dies dazu, dass die Streuung σ zumindest über einen gewissen Zeitraum durch die neu hinzukommenden Messpunkte ansteigt. Fig. 5 zeigt hierzu eine Tabelle, wie sie sich ergibt, wenn die in Fig. 4 dargestellte Tabelle nach Ablauf einer die Ausbreitungsgeschwindigkeit der Sendesignale S im Füllgut 1 verändernden chemischen Reaktion, durch aus bei drei verschiedenen oberhalb des Störers 9 liegenden Füllständen L erhaltenen Echofunktionen A(t) abgeleitete Messpunkte MS, MB fortgeschrieben wurde. Aufgrund der nun veränderten Ausbreitungsgeschwindigkeit liegen die der Reflektion am Störer 9 zuzuordnenden Messpunkte MS und die der Reflektion am Behälterboden 15 zuzuordnenden Messpunkte MB in deutlicher Entfernung von dem jeweiligen immer noch im Wesentlichen durch die größere Anzahl der vor Ablauf der chemischen Reaktion aufgezeichneten Messpunkte bestimmten Ausgleichsgradensegment GB bzw. GS2.

Sobald die Streuung σ um das jeweilige Ausgleichsgradensegment GB bzw. GS2 den zugehörigen Schwellwert übersteigt, wird das Problem vom Füllstandsmessgerät 5 selbsttätig erkannt. Indem alle zur Ableitung des jeweiligen Ausgleichsgradensegments GB, GS2 herangezogenen Messpunkte gelöscht werden, ist sicher gestellt, das keine unzuverlässigen Informationen zur Füllstandsmessung herangezogen werden können.

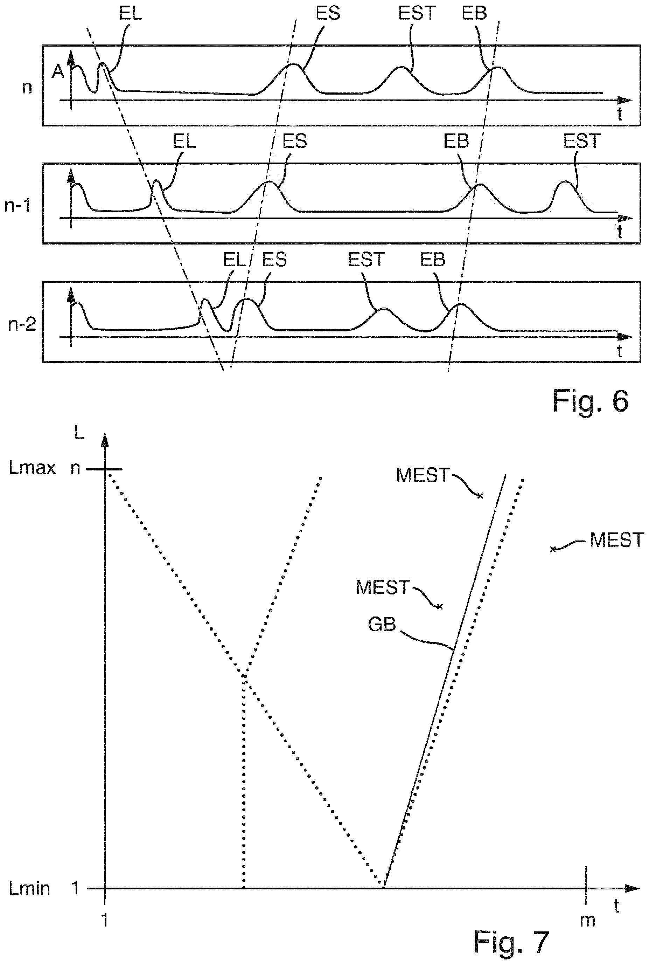

Eine weitere Ursache für eine größere bzw. ansteigende Streuung σ der Messpunkte bilden durch elektromagnetische Störeinflüsse bedingte Störsignale, die sich den Echosignalen E z.B. in der Signalverarbeitung 13 überlagern. Diese können sich in den Echofunktionen A(t) als Maxima niederschlagen, die sich physikalisch ähnlich wie auf am Behälterboden 15 reflektierte Signalanteile zurückzuführende Maxima verhalten können. Fig. 6 zeigt eine bei sinkendem Füllstand auftretende zeitliche Beispielabfolge von nacheinander aufgezeichneten Echofunktionen A(t), in denen durch elektromagnetische Störeinflüsse bedingte wandernde Störecho ST auftreten.

Diese Störeinflüsse können also Messpunkte zur Folge haben, die nicht ohne weiteres von auf Reflektionen am Behälterboden 15 zurückzuführenden Messpunkten unterscheidbar sind, und dementsprechend fälschlicher Weise als solche interpretiert werden können. Fig. 7 zeigt hierzu die durch die aus den Echofunktionen A(t) von Fig. 6 abgeleiteten Messpunkte MEST ergänzte Tabelle von Fig. 4.

Da es sich jedoch um Störsignale handelt, treten die zugehörigen Störechos EST an unabhängig vom Füllstand L schwankenden Laufzeiten t auf. Entsprechend steigt die Streuung σ der Messpunkte um das Ausgleichsgradensegment GB durch Aufnahme der durch diese Störechos EST bedingten Messpunkte MEST an.
Um zu verhindern, dass diese Messpunkte zu für die Füllstandsmessung relevanten Veränderungen der Tabelle führen, werden sie auch hier erkannt, sobald die Streuung σ den Schwellwert übersteigt. Da die auf die Störsignale zurückzuführenden Messpunkte MEST nicht von den auf die Reflektion am Behälterboden 15 zurückzuführenden Messpunkte unterschieden werden können, werden auch hier vorsorglich alle zur Ableitung des Ausgleichsgradensegments GB herangezogenen Messpunkte gelöscht.

Aufgrund der fortlaufenden Aktualisierung der Tabelle, wird die durch die Löschung der für das Ausgleichgradensegment GB herangezogenen aktuellen und historischen Messpunkte entstehende Informationslücke im laufenden Betrieb nach und nach wieder geschlossen, in dem die Tabelle anhand der in den nachfolgenden Messungen abgeleiteten aktuellen Messpunkte unter ständiger Plausiblitätskontrolle fortgeschrieben wird. Dabei ist für die Ableitung der aktuellen Messpunkte sichergestellt, dass für die Bestimmung der zugehörigen Füllstände L ausschließlich zuverlässige Information, nicht aber fehlerhafte oder fehlerhaft gewordene Informationen aus der Tabelle herangezogen werden.

Anhand der vom Füllgut 1 bedeckten Reflektoren zugeordneten Ausgleichsgradensegmente GB, GS2 kann alternativ oder zusätzlich ein weiteres Überprüfungsverfahren ausgeführt werden. Bei diesem Verfahren wird die Steigung ΔL/Δt dieser Ausgleichsgradensegmente GB, GS2 bestimmt. Die Steigung ΔL/Δt eines die Messbedingungen im Behälter 3 korrekt wiedergebenden auf Reflektionen an einen vom Füllgut 1 überdeckten Reflektor zurückzuführenden Ausgleichsgradensegments ist ein unmittelbares Maß für eine Ausbreitungsgeschwindigkeit v der Signale im Füllgut 1. Entsprechend kann die der ermittelten Steigung ΔL/Δt entsprechende Ausbreitungsgeschwindigkeit v errechnet und mit einem Referenzwert oder einem Referenzwertebereich für die tatsächlich im Füllgut 1 zu erwartende Ausbreitungsgeschwindigkeit verglichen werden.

Auch hier werden vorzugsweise alle zur Ableitung des Ausgleichsgradensegments GB bzw. des Ausgleichsgradensegments GS2 herangezogenen Messpunkte gelöscht, wenn die der ermittelten Steigung ΔL/Δt entsprechende Ausbreitungsgeschwindigkeit v außerhalb eines anhand des Referenzwerts oder des Referenzwertebereichs vorgegebenen Ausbreitungsgeschwindigkeitsbereichs liegt.

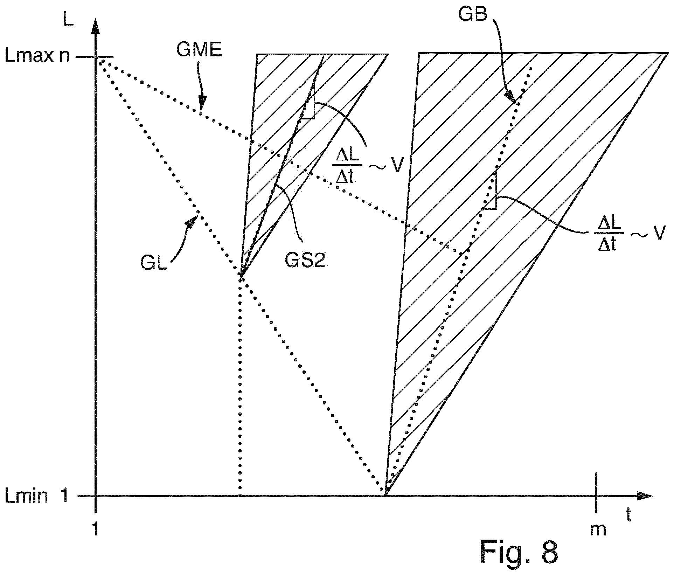

Alternativ oder zusätzlich kann anhand des Referenzwert oder des Referenzwertebereichs oder alternativ anhand der Steigung ΔL/Δt des jeweiligen Ausgleichsgradensegments GB bzw. GS2 ein mit zunehmendem Füllstand L breiter werdender Tabellenbereich vorgegeben werden, außerhalb dessen tatsächlich auf Reflektionen am zugehörigen Reflektor zurückzuführende Messpunkte nicht auftreten können. Ein solcher um das Ausgleichgradensegment GB herum definierter Tabellenbereich sowie ein um das Ausgleichgradensegment GS2 herum definierter Tabellenbereich ist in Fig. 8 schraffiert dargestellt.

Hier werden aktuelle vermeintlich einer Reflektionen am Behälterboden 15 zuzuordnende Messpunkte nur dann als historische Messpunkte übernommen, wenn sie innerhalb des Tabellenbereichs um das Reflektionen am Behälterboden 15 zugeordnete Ausgleichsgradensegment GP liegen. Ebenso werden aktuelle vermeintlich einer Reflektionen am Störer 9 zuzuordnende Messpunkte nur dann als historische Messpunkte übernommen, wenn sie innerhalb des Tabellenbereichs um das Reflektionen am Störer 9 zugeordnete Ausgleichsgradensegment GS2 liegen. In der Nähe, aber außerhalb dieser Tabellenbereiche liegende Messpunkte werden entweder sofort gelöscht, oder - soweit dies möglich ist - einer Reflektion an einem anderen Reflektor zugeordnet.

Auf diese Weise wird insb. verhindert, dass auf mehrfache Reflektionen der Sendesignale S an der Füllgutoberfläche 7 zurückzuführende Maxima der Echofunktionen A(t) versehentlich als auf Reflektionen am Behälterboden 15 oder am Störer 9 zurückzuführende Maxima interpretiert, und als solche Eingang in die Tabelle finden. Als Beispiel sind in Fig. 8 auf Mehrfachechos zurückzuführende Messpunkte dargestellt, die dadurch entstehen, dass jeweils ein Signalanteil der Sendesignale S gesendet, an der Füllgutoberfläche zum Füllstandsmessgerät zurück reflektiert, dort wieder in Richtung des Füllguts 1 reflektiert und erst im Anschluss an eine zweite Reflektion an der Füllgutoberfläche 7 vom Füllstandsmessgerät 5 empfangen werden. Die hieraus resultierenden Messpunkte verlaufen oberhalb der Messpunkte der Füllstandsechos EL entlang einer Geraden GME, deren Laufzeiten t mit sinkendem Füllstand L schneller ansteigen, als die Laufzeiten t der Gerade GL entlang der die Messpunkte der Füllstandsechos EL auftreten.

Wird im laufenden Betrieb, oder aber während einer Unterbrechung des Messbetriebs ein weiterer Störer in den Behälter 3 eingesetzt, so wird dieser im nachfolgenden Messbetrieb automatisch anhand der zugehörigen Maxima der Echofunktionen (t) als Reflektor mit erfasst. Entsprechend werden nach und nach in den den anschließend durchlaufenden Füllstanden entsprechenden Zeilen die zugehörigen Messpunkte in der Tabelle hinzugefügt. Sobald ein ausreichend großer Füllstandsbereich überfahren wurde, können auch für diesen neu hinzugekommen Störer die oben beschriebenen beiden Ausgleichsgradensegmente bestimmt, und die oben genannten Plausibilitätskontrollen entsprechend durchgeführt werden.

Vorzugsweise wird anhand der aktuellen und der historischen Messpunkte eine weitere Plausibilitätskontrolle durchgeführt, mit der die Entfernung eines in der Tabelle durch zugehörige Messpunkte erfassten Störers aus dem Behälter 3 erkannt wird. Hierzu wird über einen Zeitraum, in dem der Füllstand einen Füllstandsmessbereich vorgegebener Mindestgröße überstreicht, überprüft, ob die während dieses Zeitraum abgeleiteten aktuellen Messpunkte, Messpunkte umfassen, die einer Reflektion an dem erfassten Störer zugeordnet werden können. Ist das der Fall, ist der erfasst Störer noch immer im Behälter 3 vorhanden. Ist das nicht der Fall, werden alle Reflektionen an diesem Störer zugeordneten historischen Messpunkte gelöscht.

In der Praxis treten häufig Situationen auf, bei denen der Messbetrieb zeitweilig unterbrochen werden muss. Das ist beispielsweise der Fall, wenn der Behälter 3 gereinigt werden muss, wenn einzelne Messgeräte re-kalibriert, gewartet oder ausgetauscht werden müssen, oder wenn sich aufgrund des im Behälter 3 ablaufenden Prozesses Betriebspausen ergeben.

Bei der Wiederinbetriebnahme wird vorzugsweise auf die oben genannten vordefinierten einfachen oder mehrfachen Reflektionen an vorgegebenen Reflektoren zugeordneten Echotypen zurückgegriffen. Dabei werden mindestens zwei Echotypen herangezogen, von denen einer zwingend das Füllstandsecho ist.

Anschließend werden die Laufzeiten t der Maxima der nach der Wiederinbetriebnahme abgeleiteten Echofunktion A(t) bestimmt, und mindestens zwei dieser Maxima ausgewählt. Die ausgewählten Maxima werden mit einer der Anzahl der ausgewählten Maxima entsprechenden Anzahl von unterschiedlichen Echotypen, von denen eines zwingend vom Typ Füllstandsecho ist, kombiniert.
Dabei wird für alle möglichen Permutationen der Zuordnung der ausgewählten Maxima zu den ausgewählten Echotypen jeweils der sich aus dieser Zuordnung ergebende Füllstand bestimmt. Anhand dieses Füllstands werden dann vorläufige Messpunkte bestimmt, und es wird ein Grad der Übereinstimmung der vorläufigen Messpunkte mit den in der zugehörigen Tabellenzeile abgelegten historischen Messpunkten bestimmt.

Im Anschluss daran werden diejenigen vorläufigen Messpunkte als aktuelle Messpunkte in der Tabelle abgelegt, bei denen der höchste Grad an Übereinstimmung auftrat.

Vorzugsweise wird anhand der Zuordnung, bei der der höchste Grad an Übereinstimmung auftrat, ein Echoverfolgungsverfahren gestartet, anhand dessen zumindest die zeitliche Entwicklung des vermeintlichen Füllstandsechos verfolgt, und im weiteren Messbetrieb zur Füllstandsbestimmung herangezogen wird.

Im Anschluss daran werden die aktuellen Messpunkte der nachfolgend erhaltenen Echofunktionen A(t) jeweils in der Zeile abgelegt, die sich aus der anhand dieser Zuordnung gestarteten Echoverfolgung ergibt.

Nachfolgend werden anhand der in der Tabelle abgelegten aktuellen und historischen Messpunkte Ausgleichsgradensegmente bestimmt, die jeweils eine Abhängigkeit von Reflektionen an einem bestimmten Reflektor zugeordneten Laufzeiten vom Füllstand wiedergeben.

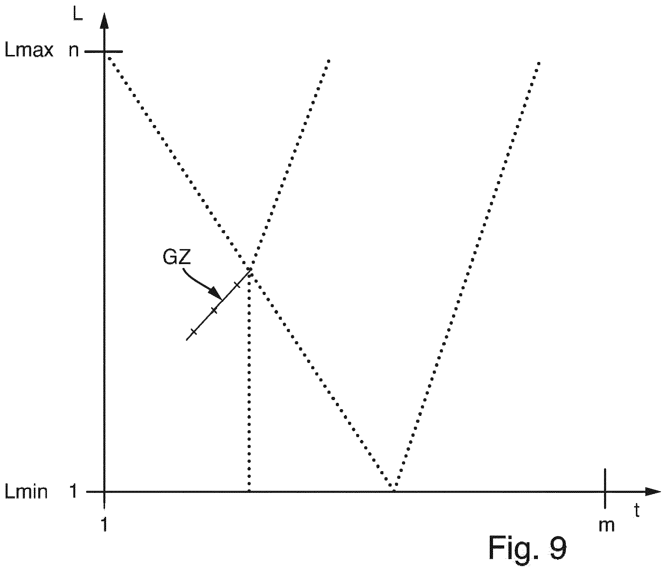

Dabei wird fortlaufend überprüft, ob sich in der Tabelle mit der Zeit ein Ausgleichsgradensegment GZ ausbildet, dass unterhalb des vermeintlich auf Reflektionen an der Füllgutoberfläche 7 zurückzuführenden Ausgleichsgradensegments verläuft, und dessen Laufzeiten t mit steigendem Füllstand L ansteigen. Ein Beispiel eines solchen Ausgleichsgradensegments GZ ist in Fig. 9 dargestellt. Tritt ein solches Ausgleichsgradensegment GZ auf, so wird die Zuordnung als Fehlerhaft erkannt, und die Echoverfolgung fortgesetzt, indem dasjenige Echo auf das dieses Ausgleichgradensegment GZ zurück geht, als Füllstandsecho EL weiter verfolgt wird. In dem Fall werden alle für die Bestimmung dieses Ausgleichsgradensegments GZ herangezogenen Messpunkte gelöscht, und die Fortschreibung der Tabelle fortgesetzt.

Die Speicher 17 von Füllstandsmessgeräten umfassen in der Regel einen vergleichsweise großen Arbeitsspeicher und einen vergleichsweise kleinen permanenten Speicher auf. Im laufenden Betrieb können die aktuellen und historischen Messpunkte ohne Weiteres im Arbeitsspeicher zwischengespeichert werden. Damit diese Daten beim Abschalten des Füllstandsmessgeräts nicht verloren gehen, werden sie im Rahmen des Abschaltvorganges vorzugsweise in den permanenten Speicher übertragen. Permanente Speicher sind vergleichsweise teuer, und werden in Füllstandsmessgeräte für eine große Vielzahl von Daten benötigt, so dass entsprechender Speicherplatz regelmäßig knapp und kostbar ist.

Zur Einsparung von permanentem Speicherplatz werden daher beispielsweise im Rahmen des Abschaltvorgangs anhand der in der Tabelle im Arbeitsspeicher abgelegten Messpunkte für alle in die Tabelle eingegangenen Echotypen Ausgleichsgradensegmente bestimmt, die jeweils die sich aus der Tabelle ergebende Abhängigkeit der Laufzeiten t der an dem zugehörigen Reflektor reflektierten Signalanteile E vom Füllstand L wiedergeben. Anschließend werden für jedes Ausgleichsgradensegment dessen Anfangs- und Endpunkt ermittelt und vor der jeweiligen Unterbrechung des Messbetriebs in dem permanenten Speicher abgelegt.

Bei der darauf folgenden Wiederaufnahme des Messbetriebs wird anhand der gespeicherten Anfangs- und Endpunkte der einzelnen Ausgleichgradensegmente eine Tabelle generiert, die entlang der Ausgleichsgradensegmente verteilt angeordnete Eintragungen aufweist.
Die auf diese Weise generierte Tabelle wird dann als Starttabelle für den nachfolgenden Messbetrieb eingesetzt, wobei die Eintragungen als historische Messpunkte behandelt werden.

Vorzugsweise wird zusätzlich zu den Anfangs- und Endpunkten der einzelnen Ausgleichsgraden die Streuung σ der zur Bestimmung des jeweiligen Ausgleichsgradensegments herangezogenen Messpunkte um das jeweilige Ausgleichsgradensegment bestimmt und zusammen mit deren Anfangs- und Endpunkt abgespeichert. Das bietet den Vorteil, dass hieraus Eintragungen generiert werden können, die diese Streuung σ um das jeweilige Ausgleichsgradensegment aufweisen. Das bietet den Vorteil, dass Veränderungen der Messbedingungen, die diese Streuung verursacht haben, und sich nach der Wiederinbetriebnahme weiter fortsetzen, schneller erkannt werden, da der Schwellwert nach der Wiederinbetriebnahme schneller überschritten werden wird.
- 1: Füllgut
- 3: Behälter
- 5: Füllstandsmessgerät
- 7: Füllgutoberfläche
- 9: Störer
- 11: Antenne
- 13: Signalverarbeitung
- 15: Behälterboden
- 17: Speicher
- 19: Auswerteeinheit

## Patentansprüche

1. Verfahren zur Messung eines Füllstands (L) eines Füllguts (1)
in einem Behälter (3) mit einem nach dem Laufzeitprinzip arbeitenden Füllstandsmessgerät das im Messbetrieb Sendesignale (S) in Richtung des Füllguts (1) in den Behälter (3) sendet und anhand deren im Behälter (3) zurückreflektierten Signalanteilen (E) Echofunktionen (A(t)) ableitet, die die Amplituden (A) der Signalanteile (E) als Funktion von deren Laufzeit (t) wiedergeben, mit Hilfe einer Tabelle,
- deren Zeilen diskreten Füllständen (L) und deren Spalten diskreten Laufzeiten (t) entsprechen, und
- in der aus in der Vergangenheit abgeleiteten Echofunktionen (A(t)) abgeleitete Informationen über Laufzeiten (t) von auf Reflektionen an im Behälter (3) befindlichen Reflektoren zurückzuführende Maxima derselben als historische Messpunkte jeweils in derjenigen Zeile abgelegt sind, deren Zeilenindex dem zugehörigen Füllstand (L) entspricht,
**dadurch gekennzeichnet, dass**
- die Tabelle anhand von im laufenden Messbetrieb abgeleiteten aktuellen Echofunktionen (A(t)) fortlaufend aktualisiert wird, in dem
-- aus aktuellen Echofunktionen (A(t)) abgeleitete Informationen über Laufzeiten (t) von auf Reflektionen an im Behälter (3) befindlichen Reflektoren zurückzuführende Maxima derselben als aktuelle Messpunkte jeweils in derjenigen Zeile abgelegt werden, deren Zeilenindex dem vom Füllstandsmessgerät ermittelten zugehörigen Füllstand entspricht,
-- anhand der historischen und der aktuellen Messpunkte eine Plausibilitätskontrolle vorgenommen wird, indem anhand von entsprechend ausgewählten in der Tabelle abgelegten aktuellen und historischen Messpunkten zumindest ein Ausgleichsgradensegment (GB, GS1, GS2), das die Abhängigkeit von jeweils ein und demselben von der Füllgutoberfläche (7) verschiedenen Reflektor zuzuordnenden Laufzeiten t vom Füllstand L wiedergibt, bestimmt wird, wobei die Plausibilität anhand der Streuung σ der zur Bestimmung des zumindest einen Ausgleichsgradensegmentes (GB, GS1, GS2) herangezogenen aktuellen und historischen Messpunkte und/oder der Steigung (ΔL/Δt) des zumindest einen Ausgleichsgradensegmentes (GB, GS1, GS2) kontrolliert wird, und
-- aufgrund der Plausibilitätskontrolle als unplausibel erkannte historische und aktuelle Messpunkte gelöscht und alle übrigen aktuellen Messpunkte als historische Messpunkte in die Tabelle übernommen werden.

2. Verfahren zur Füllstandsmessung nach Anspruch 1, bei dem
die aktuellen Messpunkte jeweils in der dem zugehörigen Füllstand entsprechenden Zeile in einem der zugehörigen Laufzeit entsprechenden Tabellenfeld eingetragen werden, wobei in den übrigen Tabellenfeldern der jeweiligen Zeile bereits eingetragene historische Messpunkte erhalten bleiben.

3. Verfahren zur Füllstandsmessung nach Anspruch 2,
**dadurch gekennzeichnet, dass**
- die Messpunkte neben der Laufzeit (t) und dem zugehörigen Füllstand (L) zusätzlich die Amplitude des zugehörigen Maximums der aktuellen Echofunktion (A(t)) wiedergeben, und
- die Amplitude des zugehörigen Maximums der aktuellen Echofunktion (A(t)) in dem zugehörigen Tabellenfeld unverändert abgespeichert wird, wenn das zugehörige Tabellenfeld vorder Eintragung des aktuellen Messpunkts frei war, und
- aus der Amplitude des historischen und der Amplitude des aktuellen Messpunkts mittels eines Filters ein Zwischenwert gebildet wird, der in dem Tabellenfeld als Amplitude abgelegt wird, wenn das zugehörige Tabellenfeld vorder Eintragung des aktuellen Messpunkts mit einem historischen Messpunkt belegt war.

4. Verfahren zur Füllstandsmessung nach Anspruch 1,
**dadurch gekennzeichnet, dass**
- anhand von entsprechend ausgewählten in der Tabelle abgelegten aktuellen und historischen Messpunkten mindestens ein Ausgleichsgradensegment (GB, GS2) bestimmt wird, das eine Abhängigkeit von Reflektionen an einem bestimmten vom Füllgut (1) verschiedenen Reflektor im Behälter (3) zugeordneten Laufzeiten (t) vom Füllstand (L) wiedergibt,
- die Plausibilitätskontrolle ein Verfahren umfasst, bei dem ein Maß für eine Streuung (σ) der zur Bestimmung des jeweiligen Ausgleichsgradensegments (GB, GS2) herangezogenen Messpunkte um das Ausgleichgradensegment (GB, GS2) bestimmt wird, und
- die zur Bestimmung des jeweiligen Ausgleichsgradensegments (GB, GS2) herangezogenen aktuellen und historischen Messpunkte gelöscht werden, wenn die Streuung (σ) einen vorgegebenen Schwellwert übersteigt.

5. Verfahren zur Füllstandsmessung nach Anspruch 1,
**dadurch gekennzeichnet, dass**
- anhand von entsprechend ausgewählten in der Tabelle abgelegten aktuellen und historischen Messpunkten mindestens ein Ausgleichsgradensegment (GB, GS2) bestimmt wird, das eine Abhängigkeit von Reflektionen an einem bestimmten vom Füllgut (1) verschiedenen Reflektor im Behälter (3) zugeordneten Laufzeiten (t) vom Füllstand (L) in einem Füllstandsbereich wiedergibt, in dem dieser Reflektor vom Füllgut (1) bedeckt ist,
- die Plausibilitätskontrolle ein Verfahren umfasst, bei dem eine der Ausbreitungsgeschwindigkeit (v) der Signale im Füllgut (1) entsprechende Steigung (ΔL/Δt) mindestens eines dieser Ausgleichsgradensegmente (GB, GS2) bestimmt wird,
- eine der Steigung (ΔL/Δt) entsprechende Ausbreitungsgeschwindigkeit (v) mit einem Referenzwert oder einem Referenzwertbereich für die im Füllgut (1) zu erwartende Ausbreitungsgeschwindigkeit verglichen wird, und
- die zur Bestimmung des jeweiligen Ausgleichsgradensegments (GB, GS2) herangezogenen aktuellen und historischen Messpunkte gelöscht werden, wenn die der ermittelten Steigung (ΔL/Δt) entsprechende Ausbreitungsgeschwindigkeit (v) außerhalb eines anhand des Referenzwerts oder des Referenzwertebereichs vorgegebenen Ausbreitungsgeschwindigkeitsbereichs liegt.

6. Verfahren zur Füllstandsmessung nach Anspruch 1,
**dadurch gekennzeichnet, dass**
- anhand von entsprechend ausgewählten in der Tabelle abgelegten aktuellen und historischen Messpunkten mindestens ein Ausgleichsgradensegment (GB, GS2) bestimmt wird, das eine Abhängigkeit von Reflektionen an einem bestimmten vom Füllgut (1) verschiedenen Reflektor im Behälter (3) zugeordneten Laufzeiten (t) vom Füllstand (L) in einem Füllstandsbereich wiedergibt, in dem dieser Reflektor vom Füllgut (1) bedeckt ist, und
- die Plausibilitätskontrolle ein Verfahren umfasst, bei dem vermeintlich einer Reflektion an diesem Reflektor zuzuordnende aktuelle Messpunkte nur dann als historische Messpunkte übernommen werden, wenn sie innerhalb eines anhand eines Referenzwerts oder eines Referenzwertebereichs für die im Füllgut (1) zu erwartende Ausbreitungsgeschwindigkeit oder anhand der Steigung (ΔL/Δt) des jeweiligen Ausgleichsgradensegments (GB, GS2) vorgegebenen Tabellenbereichs um dieses Ausgleichsgradensegment (GB, GS2) auftreten.

7. Verfahren zur Füllstandsmessung nach Anspruch 1,
**dadurch gekennzeichnet, dass**
- für Maxima der Echofunktionen (A(t)) Echotypen vordefiniert sind,
- die einzelnen Echotypen jeweils diejenigen Maxima bezeichnen, die auf eine einfache Reflektion oder eine Mehrfachreflektionen an einem dem Echotyp zugeordneten bestimmten Reflektor zurückzuführen sind, wobei die Reflektoren mindestens die Füllgutoberfläche (7) und den Behälterboden (15) umfassen,
- die Laufzeiten (t) der Maxima einer unmittelbar nach einer Wiederaufnahme des Messbetriebs abgeleiteten Echofunktion (A(t)) bestimmt werden,
- mindestens zwei dieser Maxima ausgewählt werden,
- eine der Anzahl der ausgewählten Maxima entsprechende Anzahl von Echotypen, von denen einer zwingend vom Typ eines auf eine Reflektion an der Füllgutoberfläche zurückzuführenden Füllstandsecho (EL) ist, ausgewählt werden,
- für alle möglichen Permutationen der Zuordnung der ausgewählten Maxima zu den ausgewählten Echotypen
-- jeweils der sich aus dieser Zuordnung ergebende Füllstand (L) bestimmt wird,
-- jeweils anhand dieses Füllstands (L) vorläufige Messpunkte bestimmt werden,
-- jeweils ein Grad der Übereinstimmung der vorläufige Messpunkte mit den in der zugehörigen Tabellenzeile abgelegten historischen Messpunkten bestimmt wird, und
- diejenigen vorläufigen Messpunkte als aktuelle Messpunkte in der Tabelle abgelegt werden, bei denen der höchste Grand an Übereinstimmung auftrat.

8. Verfahren zur Füllstandsmessung nach Anspruch 7,
**dadurch gekennzeichnet, dass**
- anhand der Zuordnung bei der der höchste Grad an Übereinstimmung auftrat ein Echoverfolgungsverfahren gestartet wird, anhand dessen zumindest die zeitliche Entwicklung des vermeintlichen Füllstandsechos (EL) verfolgt wird,
- die anhand dieser Zuordnung aus nachfolgenden Echofunktionen (A(t)) erhaltenen aktuellen Messpunkte in die Tabelle eingetragen werden,
- anhand der in der Tabelle abgelegten aktuellen und historischen Messpunkte Ausgleichsgradensegmente bestimmt werden, die jeweils eine Abhängigkeit von Reflektionen an einem bestimmten Reflektor zugeordneten Laufzeiten (t) vom Füllstand (L) wiedergeben, und
- die Zuordnung verworfen wird, wenn sich unterhalb des Reflektionen an der Füllgutoberfläche (7) zugeordneten Ausgleichsgradensegments ein Ausgleichsgradensegment (GZ) abzeichnet, dessen Laufzeiten (t) mit steigendem Füllstand (L) ansteigen.

9. Verfahren zur Füllstandsmessung nach einem der vorangehenden Ansprüche,
**dadurch gekennzeichnet, dass**
- anhand der in der Tabelle abgelegten Messpunkte Ausgleichsgradensegmente bestimmt werden, die jeweils eine Abhängigkeit von Reflektionen an einem bestimmten Reflektor zugeordneten Laufzeiten (t) vom Füllstand (L) wiedergeben, und
- vor jeder Unterbrechung des Messbetrieb Anfangs- und Endpunkte der einzelnen Ausgleichgradensegmente im Füllstandsmessgerät (5) abgespeichert werden, und
- bei einer darauf folgenden Wiederaufnahme des Messbetriebs anhand der Anfangs- und Endpunkte der Ausgleichgradensegmente eine Tabelle generiert wird, die entlang der Ausgleichsgradensegmente verteilt angeordnete Eintragungen aufweist, und
- diese Tabelle als Starttabelle für den nachfolgenden Messbetrieb eingesetzt wird, wobei die Eintragungen als historische Messpunkte behandelt werden.

10. Verfahren nach Anspruch 9,
**dadurch gekennzeichnet, dass**
für jedes Ausgleichgradensegment ein Mass für eine Streuung (σ) der zur Bestimmung des jeweiligen Ausgleichsgradensegments herangezogenen Messpunkte um das jeweilige Ausgleichsgradensegment bestimmt und zusammen mit deren Anfangs- und Endpunkt abgespeichert wird.

11. Verfahren nach Anspruch 1,
**dadurch gekennzeichnet, dass**
- über einen Zeitraum, in dem der Füllstand (L) einen Füllstandsmessbereich vorgegebener Mindestgröße überstreicht, überprüft wird, ob die während dieses Zeitraums abgeleiteten aktuellen Messpunkte Messpunkte umfassen, die einer Reflektion an einem in der Tabelle erfassten Störer zugeordnet werden können, und
- alle Reflektionen an diesem Störer zugeordneten historischen Messpunkte gelöscht werden, wenn innerhalb dieses Zeitraums kein aktueller Messpunkt abgeleitet wurde, der einer Reflektion an dem in der Tabelle erfassten Störer zugeordnet werden kann.

## Claims

1. Procedure for measuring a level (L) of a medium (1) in a vessel (3) with a level transmitter that operates according to the transit time principle which, in the measuring mode, sends transmission signals (S) in the direction of the medium (1) into the vessel (3) and, on the basis of the signal components (E) reflected back in the vessel (3), derives echo functions (A(t)) that reproduce the amplitudes (A) of the signal components (E) as a function of their transit time (t), with the aid of a table,
- whose lines correspond to discrete levels (L) and whose columns correspond to discrete transit times (t), and
- in which information, derived from echo functions (A(t)) derived in the past, concerning transit times (t) of maxima of echo functions which are attributable to reflections at reflectors located in the vessel (3) is recorded as historical measuring points in the specific line whose line index corresponds to the associated fill level (L),
**characterized in that**
- the table is updated continuously on the basis of current echo functions (A(t)) derived during measurement,
-- wherein information, derived from current echo functions (A(t)), about transit times (t) of maxima of echo functions which are attributable to reflections at reflectors located in the vessel (3), is recorded as current measuring points in the line whose line index corresponds to the associated level determined by the level transmitter,
-- wherein a plausibility check is performed on the basis of the historical and current measuring points by determining at least one regression line segment (GB, GS1, GS2), using appropriately selected current and historical measuring points which are saved in the table, which reflects the dependence of transit times t - which are to be assigned to the same reflector which is different from the surface of the medium (7) - in relation to the fill level L, wherein the plausibility is checked on the basis of the scatter σ of the current and historical measuring points used to determine the at least one regression line segment (GB, GS1, GS2) and/or the slope (ΔL/Δt) of the at least one regression line segment (GB, GS1, GS2), and
-- on the basis of the plausibility check, historical and current measuring points which are found to be implausible are deleted and all other current measuring points are transferred to the table as historical measuring points

2. Procedure for level measurement as claimed in Claim 1, wherein the current measuring points are each entered in the specific line corresponding to the associated fill level in a table field corresponding to the associated transit time, wherein historical measuring points already entered in the other table fields of the respective line are retained.

3. Procedure for level measurement as claimed in Claim 2,
**characterized in that**
- in addition to the transit time (t) and the associated level (L), the measuring points also reproduce the amplitude of the associated maximum of the current echo function (A(t)), and
- the amplitude of the associated maximum of the current echo function (A(t)) is saved unchanged in the associated table field if the associated table field was empty before the current measuring point was entered, and
- an intermediate value is formed from the amplitude of the historical measuring point and the amplitude of the current measuring point using a filter, said value being recorded in the table field as an amplitude if the associated table field was assigned a historical measuring point before the entry of the current measuring point.

4. Procedure for level measurement as claimed in Claim 1,
**characterized in that**
- at least one regression line segment (GB, GS2) is determined on the basis of appropriately selected current and historical measuring points saved in the table, said segment reproducing a dependence of transit times (t) which reflects the dependence of transit times t - which are assigned to reflections at a certain reflector in the vessel (3) which is different from the medium (1) - in relation to the fill level (L),
- the plausibility check comprises a method whereby an indicator is determined for a scatter (σ) of the measuring points - which are used to determine the specific regression line segment (GB, GS2) - around the regression line segment (GB, GS2), and
- the current and historical measuring points used to determine the respective regression line segment (GB, GS2) are deleted if the scatter (σ) exceeds a predefined threshold value.

5. Procedure for level measurement as claimed in Claim 1,
**characterized in that**
- at least one regression line segment (GB, GS2) is determined on the basis of appropriately selected current and historical measuring points which are saved in the table, said segment reproducing a dependence of transit times (t), which are assigned to reflections at a certain reflector in the vessel (3) that is different from the medium (1), in relation to the fill level (L) in a level range in which this reflector is covered with medium (1),
- the plausibility check comprises a method in which a slope (ΔL/Δt) of at least one of these regression line segments (GB, GS2) is determined, said slope corresponding to the speed of propagation (v) of the signals in the medium (1),
- a speed of propagation (v) corresponding to the slope (ΔL/Δt) is compared to a reference value or a range of reference values for the speed of propagation to be expected in the medium (1), and
- the current and historical measuring points used to determine the respective regression line segment (GB, GS2) are deleted if the speed of propagation (v) corresponding to the determined slope (ΔL/Δt) is located outside a propagation speed range predefined on the basis of the reference value or the range of reference values.

6. Procedure for level measurement as claimed in Claim 1,
**characterized in that**
- at least one regression line segment (GB, GS2) is determined on the basis of appropriately selected current and historical measuring points which are saved in the table, said segment reproducing a dependence of transit times (t), which are assigned to reflections at a certain reflector in the vessel (3) that is different from the medium (1), in relation to the fill level (L) in a level range in which this reflector is covered with medium (1), and
- the plausibility check comprises a method in which current measuring points which are supposed to be assigned to a reflection at this reflector are only accepted as historical measuring points if they occur in an area of the table around this regression line segment (GB, GS2), said area of the table being predefined on the basis of a reference value or a range of reference values for the speed of propagation to be expected in the medium (1) or on the basis of the slope (ΔL/Δt) of the respective regression line segment (GB, GS2).

7. Procedure for level measurement as claimed in Claim 1,
**characterized in that**
- echo types are predefined for maxima of the echo functions (A(t))
- the individual echo types each designate the maxima that are attributable to a single reflection or multiple reflections at a certain reflector assigned to the echo type, wherein the reflectors comprise at least the surface of the medium (7) and the bottom of the vessel (15),
- the transit times (t) of the maxima of an echo function (A(t)) derived immediately after the resumption of measuring operation are determined,
- at least two of these maxima are selected,
- a number of echo types corresponding to the number of the selected maxima is selected, wherein of these echo types one is necessarily of the type of a level echo (EL) which is attributable to a reflection at the surface of the medium,
- for all possible permutations of the assignment of the selected maxima to the selected echo types
-- the level (L) resulting from this assignment is determined in each case,
-- preliminary measuring points are determined in each case on the basis of this level (L),
-- a degree of match of the preliminary measuring points with the historical measuring points recorded in the corresponding table line is determined in each case, and
- the preliminary measuring points that presented the highest degree of match are the measuring points that are saved as current measuring points in the table.

8. Procedure for level measurement as claimed in Claim 7,
**characterized in that**
- an echo tracking process is started on the basis of the assignment at which the highest degree of match took place, on the basis of said process at least the development of the supposed echo level (EL) over time is tracked,
- the current measuring points obtained on the basis of this assignment from the subsequent echo functions (A(t)) are entered in the table,
- on the basis of the current and historical measuring points saved in the table, regression line segments are determined which each reproduce a dependence of the transit times (t), assigned to reflections at a certain reflector, in relation to the fill level (L), and
- the assignment is rejected if a regression line segment (GZ) whose transit times (t) increase with an increasing level (L) occurs below the regression line segment that is assigned to reflections at the surface of the medium (7).

9. Procedure for level measurement as claimed in one of the previous claims,
**characterized in that**
- on the basis of the measuring points saved in the table, regression line segments are determined that each reproduce a dependence of transit times (t), assigned to reflections at a certain reflector, in relation to the fill level (L), and
- before each interruption in the measuring mode, the start and end points of the individual regression line segments are saved in the level transmitter (5), and
- in the event that measuring operation is resumed, a table is generated on the basis of the start and end points of the regression line segments, wherein the entries in the table are distributed along the regression line segments, and
- this table is used as the starting table for the subsequent measuring operation, wherein the entries are treated as historical measuring points.

10. Procedure as claimed in Claim 9,
**characterized in that**
for each regression line segment, a measure of the scatter (σ) of the measuring points used to determine the regression line segment is determined around the respective regression line segment, and is saved together with the associated start and end points.

11. Procedure as claimed in Claim 1,
**characterized in that**
- during a period of time in which the fill level (L) covers a level measuring range of a specified minimum size, a check is performed to determine whether the current measuring points derived during this time comprise measuring points that can be attributed to a reflection at a disturbance recorded in the table, and
- all historical measuring points assigned to this disturbance are deleted if, during this time, no current measuring point has been derived which can be assigned to a reflection at the disturbance recorded in the table.

## Revendications

1. Procédé destiné à la mesure d'un niveau (L) d'un produit (1) dans un réservoir (3) avec un transmetteur de niveau fonctionnant d'après le principe du temps de transit qui, en mode de mesure, envoie des signaux d'émission (S) en direction du produit (1) dans le réservoir (3) et déduit à partir des composantes de signal (E) réfléchies dans le réservoir (3) des fonctions d'écho (A(t)) reproduisant les amplitudes (A) des composantes de signal (E) en fonction de leur temps de transit (t), à l'aide d'un tableau,
- dont ses lignes correspondent aux niveaux (L) discrets et ses colonnes aux temps de transit (t) discrets, et
- dans lequel des informations, déduites de fonctions d'écho (A(t)) dérivées dans le passé, concernant des temps de transit (t) de maxima de celles-ci, attribuables à des réflexions sur des réflecteurs se trouvant dans le réservoir (3), sont enregistrées comme points de mesure historiques respectivement dans la ligne dont l'indice de ligne correspond au niveau de remplissage associé (L),
**caractérisé en ce que**
- le tableau est continuellement mis à jour sur la base des fonctions d'écho actuelles (A(t)) déduites pendant la mesure,
-- **en ce que** les informations déduites des fonctions d'écho (A(t)) actuelles via les temps de transit (t) des maxima de celles-ci, attribuables à des réflexions sur des réflecteurs se trouvant dans le réservoir (3), sont enregistrées comme points de mesure actuels respectivement dans la ligne dont l'indice de ligne correspond au niveau associé déterminé par le transmetteur de niveau,
-- **en ce qu'**est effectué, sur la base des points de mesure historiques et actuels, un contrôle de plausibilité, au cours duquel est déterminé, sur la base de points de mesure actuels et historiques sélectionnés de manière appropriée et enregistrés dans le tableau, au moins un segment linéaire de compensation (GB, GS1, GS2), qui reflète la dépendance des temps de transit t - devant être attribués à un seul et même réflecteur différent de la surface du produit (7) - par rapport au niveau de remplissage L, la plausibilité étant vérifiée sur la base de la dispersion σ des points de mesure actuels et historiques utilisés pour déterminer au moins un segment linéaire de compensation (GB, GS1, GS2) et/ou la pente (ΔL/Δt) de l'au moins un segment linéaire de compensation (GB, GS1, GS2), et
-- en raison du contrôle de plausibilité, les points de mesure historiques et actuels qui ont été reconnus comme non plausibles sont supprimés et tous les points de mesure actuels restants sont transférés dans le tableau en tant que points de mesure historiques

2. Procédé destiné à la mesure de niveau selon la revendication 1, pour lequel les points de mesure actuels sont entrés dans la ligne correspondant au niveau de remplissage associé dans un champ de tableau correspondant à la durée d'exécution associée, les points de mesure historiques déjà entrés dans les autres champs de tableau de la ligne respective étant conservés.

3. Procédé destiné à la mesure de niveau selon la revendication 2,
**caractérisé en ce que**
- outre le temps de transit (t) et le niveau associé (L), les points de mesure reproduisent également l'amplitude du maximum associé de la fonction écho actuelle (A(t)), et
- l'amplitude du maximum associé de la fonction d'écho actuelle (A(t)) est enregistrée de façon inchangée dans le champ de tableau associé si le champ de tableau associé était libre avant l'entrée du point de mesure actuel, et
- une valeur intermédiaire est formée à partir de l'amplitude du point de mesure historique et de l'amplitude du point de mesure actuel au moyen d'un filtre, laquelle valeur est enregistrée dans le champ de tableau comme amplitude si le champ de tableau associé était occupé par un point de mesure historique avant l'entrée du point de mesure actuel.

4. Procédé destiné à la mesure de niveau selon la revendication 1,
**caractérisé en ce que**
- au moins un segment linéaire de compensation (GB, GS2) est déterminé sur la base de points de mesure actuels et historiques sélectionnés de manière appropriée et enregistrés dans le tableau, lequel segment reproduit une dépendance des réflexions sur un réflecteur donné dans le réservoir (3), lequel réflecteur est différent du produit (1), par rapport au niveau (L),
- le contrôle de plausibilité comprend une méthode dans laquelle est déterminée une mesure d'une dispersion (σ) des points de mesure - utilisés pour déterminer le segment linéaire de compensation respectif (GB, GS2) - autour du segment linéaire de compensation (GB, GS2), et
- les points de mesure actuels et historiques utilisés pour déterminer le segment linéaire de compensation respectif (GB, GS2) sont supprimés si la dispersion (σ) dépasse une valeur seuil prédéfinie.

5. Procédé destiné à la mesure de niveau selon la revendication 1,
**caractérisé**
**en ce que**
- au moins un segment linéaire de compensation (GB, GS2) est déterminé sur la base de points de mesure actuels et historiques sélectionnés de manière appropriée et enregistrés dans le tableau, lequel segment reproduit une dépendance des réflexions sur un réflecteur donné dans le réservoir (3) - lequel réflecteur est différent du produit (1) - par rapport au niveau de remplissage (L) dans une gamme de niveau dans laquelle ce réflecteur est recouvert par le produit (1),
- le contrôle de plausibilité comprend une méthode dans laquelle est déterminée une pente (ΔL/Δt) d'au moins l'un de ces segments linéaires de compensation (GB, GS2) correspondant à la vitesse de propagation (v) des signaux dans le produit (1),
- une vitesse de propagation (v) correspondant à la pente (ΔL/Δt) est comparée à une valeur de référence ou à une plage de valeurs de référence pour la vitesse de propagation attendue dans le produit (1), et
- les points de mesure actuels et historiques utilisés pour déterminer le segment linéaire de compensation respectif (GB, GS2) sont supprimés si la vitesse de propagation (v) correspondant à la pente déterminée (ΔL/Δt) se situe en dehors d'une gamme de vitesse de propagation prédéfinie sur la base de la valeur de référence ou de la plage de valeurs de référence.

6. Procédé destiné à la mesure de niveau selon la revendication 1,
**caractérisé en ce que**
- au moins un segment linéaire de compensation (GB, GS2) est déterminé sur la base de points de mesure actuels et historiques sélectionnés de manière appropriée et enregistrés dans le tableau, lequel segment reproduit une dépendance des réflexions sur un réflecteur donné dans le réservoir (3) - lequel réflecteur est différent du produit (1) - par rapport au niveau (L) dans une gamme de niveau de remplissage dans laquelle ce réflecteur est recouvert par le produit (1), et
- le contrôle de plausibilité comprend une méthode dans laquelle les points de mesure actuels qui sont supposés être affectés à une réflexion sur ce réflecteur ne sont acceptés comme points de mesure historiques que s'ils se trouvent dans une zone du tableau autour de ce segment linéaire de compensation (GB, GS2), laquelle zone est prédéfinie sur la base d'une valeur de référence ou d'une plage de valeurs de référence pour la vitesse de propagation attendue dans le produit (1) ou sur la base de la pente (ΔL/Δt) du segment linéaire de compensation (GB, GS2) respectif.

7. Procédé destiné à la mesure de niveau selon la revendication 1,
**caractérisé en ce que**
- des types d'écho sont prédéfinis pour les maxima des fonctions d'écho (A(t))
- les différents types d'écho désignent chacun les maxima qui sont dus à une réflexion unique ou à des réflexions multiples sur un réflecteur donné attribué au type d'écho, les réflecteurs comprenant au moins la surface du produit (7) et le fond de réservoir (15),
- les temps de transit (t) des maxima d'une fonction d'écho (A(t)) dérivée immédiatement après une reprise de la mesure sont déterminés,
- au moins deux de ces maxima sont sélectionnés,
- un certain nombre de types d'écho correspondant au nombre de maxima sélectionnés, dont l'un est nécessairement du type d'un écho de niveau (EL) dû à une réflexion à la surface du produit, sont sélectionnés,
- pour toutes les permutations possibles de l'attribution des maxima sélectionnés aux types d'écho sélectionnés
-- est déterminé respectivement le niveau (L) résultant de cette attribution,
-- sont déterminés respectivement des points de mesure provisoires sur la base de ce niveau (L),
-- est déterminé respectivement un degré de concordance des points de mesure provisoires avec les points de mesure historiques enregistrés dans la ligne correspondante du tableau, et
- **en ce que** ce sont les points de mesure provisoires, pour lesquels le degré de concordance le plus élevé s'est produit, qui sont enregistrés comme points de mesure actuels dans le tableau.

8. Procédé destiné à la mesure de niveau selon la revendication 7,
**caractérisé en ce que**
- sur la base de l'attribution à laquelle le degré de concordance le plus élevé s'est produit, une procédure de suivi de l'écho est lancée, au moyen de laquelle au moins l'évolution temporelle de l'écho de niveau présumé (EL) est suivie,
- les points de mesure actuels obtenus à partir des fonctions d'écho suivantes (A(t)) sur la base de cette attribution sont enregistrés dans le tableau,
- sont déterminés, sur la base des points de mesure actuels et historiques enregistrés dans le tableau, des segments linéaires de compensation dont chacun reflète une dépendance des temps de transit (t), attribués aux réflexions sur un réflecteur donné, par rapport au niveau (L), et
- l'attribution est rejetée si un segment linéaire de compensation (GZ) apparaît sous le segment linéaire de compensation attribué aux réflexions sur la surface du produit (7), segment dont les temps de transit (t) augmentent à mesure que le niveau (L) augmente.

9. Procédé destiné à la mesure de niveau selon l'une des revendications précédentes,
**caractérisé en ce que**
- sont déterminés, sur la base des points de mesure enregistrés dans le tableau, des segments linéaires de compensation qui reflètent chacun une dépendance du niveau (L) par rapport aux temps de transit (t) attribués aux réflexions sur un réflecteur donné, et
- avant chaque interruption du mode de mesure, les points de départ et d'arrivée des différents segments linéaires de compensation sont enregistrés dans le transmetteur de niveau (5), et
- lors d'une reprise ultérieure du mode de mesure, un tableau est généré sur la base des points de départ et d'arrivée des segments linéaires de compensation, tableau dont les entrées sont réparties le long des segments linéaires de compensation, et
- ce tableau est utilisé comme tableau de départ pour le mode de mesure suivant, les entrées étant traitées comme des points de mesure historiques.

10. Procédé selon la revendication 9,
**caractérisé**
**en ce que** pour chaque segment linéaire de compensation est déterminée une mesure d'une dispersion (σ) des points de mesure - utilisés pour déterminer le segment linéaire de compensation respectif - autour du segment linéaire de compensation respectif, et laquelle dispersion est enregistrée avec ses points de départ et d'arrivée.

11. Procédé selon la revendication 1,
**caractérisé en ce que**
- sur une période de temps pendant laquelle le niveau (L) couvre une gamme de mesure de niveau d'une taille minimale prédéfinie, il est vérifié si les points de mesure actuels dérivés pendant cette période comprennent des points de mesure qui peuvent être attribués à une réflexion d'un écho parasite enregistré dans le tableau, et
- toutes les réflexions aux points de mesure historiques attribuées à cet écho parasite sont supprimées si aucun point de mesure actuel, pouvant être attribué à une réflexion au niveau de l'écho parasite enregistré dans le tableau, n'a été dérivé au cours de cette période.
